(19) Europäisches Patentamt
European Patent Office
Office européen des brevets

(11) **EP 4 709 002 A1**

(12) **EUROPEAN PATENT APPLICATION**
published in accordance with Art. 153(4) EPC

(43) Date of publication:
**11.03.2026 Bulletin 2026/11**

(21) Application number: **24806062.6**

(22) Date of filing: **11.01.2024**

(51) International Patent Classification (IPC):
***H04W 72/0453*** *(2023.01)*

(52) Cooperative Patent Classification (CPC):
**H04W 56/00; H04W 72/0453**

(86) International application number:
**PCT/CN2024/071737**

(87) International publication number:
**WO 2024/234698 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2023 CN 202310541473**
**11.08.2023 CN 202311016420**

(71) Applicant: **Huawei Technologies Co., Ltd.**
**Shenzhen, Guangdong 518129 (CN)**

(72) Inventors:
• **LI, Chao**
**Shenzhen, Guangdong 518129 (CN)**
• **MI, Xiang**
**Shenzhen, Guangdong 518129 (CN)**

(74) Representative: **Roth, Sebastian**
**Mitscherlich PartmbB**
**Karlstraße 7**
**80333 München (DE)**

(54) **COMMUNICATION METHOD AND APPARATUS**

(57)     This application provides a communication method and an apparatus. The method includes: determining a first frequency domain resource set in a first time unit, determining a transmit power for a first message based on a maximum transmit power of a first device and a first parameter, and sending the first message in the first time unit based on the transmit power for the first message. The transmit power for the first message does not exceed a difference between the maximum transmit power of the first device and the first parameter, the first frequency domain resource set includes a frequency domain resource of a synchronization signal used for synchronization, the first frequency domain resource set is included in M frequency domain resource sets that carry the first message, M is a quantity of frequency domain resource sets occupied by the first message in a BWP, Q is a maximum quantity of frequency domain resource sets used for sending a synchronization signal in the BWP, M is less than or equal to Q, and Q is an integer greater than or equal to 2. According to the method disclosed in this application, fluctuation in a signal power for transmitting the synchronization signal on the first frequency domain resource set can be avoided, ensuring transmission performance.

FIG. 2

EP 4 709 002 A1

**Description**

This application claims priority to Chinese Patent Application No. 202310541473.1, filed with the China National Intellectual Property Administration on May 12, 2023 and entitled "COMMUNICATION METHOD AND APPARATUS", and claims priority to Chinese Patent Application No. 202311016420.4, filed with the China National Intellectual Property Administration on August 11, 2023 and entitled "COMMUNICATION METHOD AND APPARATUS", both of which are incorporated herein by reference in their entireties.

**TECHNICAL FIELD**

This application relates to the communication field, and more specifically, to a communication method and an apparatus.

**BACKGROUND**

Currently, in sidelink (sidelink, SL) communication, enabling an unlicensed spectrum is an important evolution direction. In the unlicensed spectrum, a terminal may use a spectrum resource through contention. In a possible manner, the terminal contends for a channel through listen-before-talk (listen-before-talk, LBT), to use a channel resource. If the terminal successfully performs the LBT, the terminal may send data by using the channel resource, and the terminal may further share the channel resource with another terminal.

To meet a regulation requirement, how to ensure stability of a channel transmit power of the terminal is a problem that needs to be considered currently.

**SUMMARY**

This application provides a communication method and an apparatus, to avoid communication interruption, maintain stability of a transmit power, and improve transmission performance.

According to a first aspect, a communication method is provided. The method may be performed by a first device, or may be performed by a chip or a circuit used for the first device. This is not limited in this application. For ease of description, the following uses an example in which the first device performs the method for description.

The method includes: The first device determines a first frequency domain resource set in a first time unit, where the first frequency domain resource set includes a frequency domain resource of a synchronization signal used for synchronization, the first frequency domain resource set is included in M frequency domain resource sets that carry a first message, M is a quantity of frequency domain resource sets occupied by the first message in a bandwidth part (bandwidth part, BWP), Q is a maximum quantity of frequency domain resource sets used for sending a synchronization signal in the BWP, M is less than or equal to Q, and Q is an integer greater than or equal to 2; the first device determines a transmit power for the first message based on a maximum transmit power of the first device and a first parameter, where the transmit power for the first message does not exceed a difference between the maximum transmit power of the first device and the first parameter; and the first device sends the first message in the first time unit based on the transmit power for the first message.

For example, a unit of the transmit power for the first message is dBW or dBmW, and a unit of the first parameter is decibel dB.

When the unit of the transmit power for the first message and a unit of the maximum transmit power of the first device are W or mW, the transmit power for the first message does not exceed a ratio of the maximum transmit power of the first device to the first parameter.

According to the solution provided in this application, a transmit power for the synchronization signal that is transmitted by the first device on the first frequency domain resource set in the BWP and that is used for synchronization is determined, to avoid fluctuation in the power for the synchronization signal, ensure stability of a transmit power during data transmission on the first frequency domain resource set, improve system transmission performance, and avoid communication interruption and unnecessary losses of transmission performance caused by frequent synchronization source switching performed by the first device during synchronization due to fluctuation in the transmit power for the synchronization signal.

With reference to the first aspect, in some implementations of the first aspect, the transmit power for the first message is a transmit power of the first frequency domain resource set, a value of the first parameter is $\Delta$, $\Delta = A$, and $A = 10 \, log_{10}(Q)$, or A is a power adjustment factor for sending the first message.

With reference to the first aspect, in some implementations of the first aspect, the transmit power for the first message is a transmit power of the M frequency domain resource sets, a value of the first parameter is $\Delta$, $\Delta = A - 10 \, log_{10}(M)$, and $A = 10 \, log_{10}(Q)$, or A is a power adjustment factor for sending the first message.

With reference to the first aspect, in some implementations of the first aspect, when the first message is a synchronization signal block SSB, the transmit power $P_{SSB}(i)$ for the first message satisfies:

$$P_{SSB}(i) = min(P_{CMAX} - \Delta, P_{O,SSB} + 10\, log_{10}(2^{\mu} \cdot M^{SSB}) + \alpha_{SSB} \cdot PL);$$

or

$$P_{SSB}(i) = min(P_{CMAX}, P_{O,SSB} + 10\, log_{10}(2^{\mu} \cdot M^{SSB}) + \alpha_{SSB} \cdot PL) - \Delta;$$

or

$$P_{SSB}(i,j) = P_{CMAX} - \Delta,$$

where

$i$ represents an index of the first time unit, $P_{CMAX}$ represents the maximum transmit power of the first device, $\Delta$ is the value of the first parameter, $M^{SSB}$ represents a bandwidth of the SSB, $\mu$ is a subcarrier spacing at which the first device sends the SSB, $P_{O,SSB}$ and $\alpha_{S\text{-}SSB}$ represent transmit power parameters of the SSB, and $PL$ represents a path loss between the first device and a serving cell.

Based on this implementation, a transmit power for an S-SSB of the first device in the first frequency domain resource set or a transmit power for an S-SSB in the M frequency domain resource sets is determined, to avoid a transmission loss caused by fluctuation in transmit powers for S-SSBs in different frequency domain resource sets.

With reference to the first aspect, in some implementations of the first aspect, when the first message is a physical sidelink shared channel PSSCH, the transmit power $P_{PSSCH}(i)$ for the first message satisfies:

$$P_{PSSCH}(i) = min\left(P_{CMAX} - \Delta, P_{MAX,CBR}, min(P_{PSSCH,D}(i), P_{PSSCH,SL}(i))\right),$$

where

$i$ represents the index of the first time unit, $\Delta$ is the value of the first parameter, $P_{MAX,CBR}$ represents a maximum transmit power determined based on a channel busy ratio CBR, $P_{PSSCH,D}(i)$ represents a value of a power parameter that is of the PSSCH in the first time unit i and that is determined based on a downlink path loss, and $P_{PSSCH,SL}(i)$ represents a value of a power parameter that is of the PSSCH in the first time unit i and that is determined based on a sidelink path loss.

Based on this implementation, a transmit power of a PSSCH of the first device in the first frequency domain resource set or a transmit power of a PSSCH in the M frequency domain resource sets is determined, to avoid a transmission loss caused by fluctuation in transmit powers of PSSCHs in different frequency domain resource sets.

With reference to the first aspect, in some implementations of the first aspect, Q represents a quantity of frequency domain resource sets for sending an SSB in the BWP; or Q represents a quantity of frequency domain resource sets included in a resource pool, and the resource pool is located in the BWP.

With reference to the first aspect, in some implementations of the first aspect, a frequency of the synchronization signal is configured by using signaling or predefined.

According to a second aspect, a communication method is provided. The method may be performed by a first device, or may be performed by a chip or a circuit used for the first device. This is not limited in this application. For ease of description, the following uses an example in which the first device performs the method for description.

The method includes: obtaining a first frequency of a first SSB used for synchronization, where the first frequency is located in a first frequency domain resource set, the first frequency domain resource set includes all subcarriers that carry the first SSB, and the first frequency domain resource set is located in a bandwidth part BWP; and sending the first SSB based on the first frequency.

According to the solution provided in this application, the first frequency that is of the first SSB used for synchronization and that is in the first frequency domain resource set in the BWP is constrained, to ensure that the first frequency domain resource set includes all the subcarriers that carry the first SSB, and to determine a sending behavior of the first device, so as to maximize system transmission performance.

According to a third aspect, a communication method is provided. The method may be performed by a second device, or may be performed by a chip or a circuit used for the second device. This is not limited in this application. For ease of description, the following uses an example in which the second device performs the method for description.

The method includes: obtaining a first frequency of a first SSB used for synchronization, where the first frequency is located in a first frequency domain resource set, the first frequency domain resource set includes all subcarriers that carry the first SSB, and the first frequency domain resource set is located in a bandwidth part BWP; and receiving the first SSB based on the first frequency.

According to the solution provided in this application, the first frequency that is of the first SSB used for synchronization and that is in the first frequency domain resource set in the BWP is constrained, to ensure that the first frequency domain resource set includes all the subcarriers that carry the first SSB, and to determine a receiving behavior of the second device, so as to maximize system transmission performance.

With reference to the second aspect or the third aspect, in some implementations, obtaining, the first frequency of the first SSB used for synchronization includes: determining the first frequency based on at least one of a subcarrier spacing, a first gap, a second gap, a third gap, or a quantity N of SSBs included in the first frequency domain resource set, where N is an integer greater than or equal to 2, where the subcarrier spacing is a subcarrier spacing at which the first SSB is sent, the first gap is a frequency gap between a start frequency of the first frequency domain resource set and a start frequency of an SSB with a lowest frequency in the first frequency domain resource set, the second gap is a frequency gap between two adjacent SSBs in the first frequency domain resource set, and the third gap is a frequency gap between an end frequency of the first frequency domain resource set and an end frequency of an SSB with a highest frequency in the first frequency domain resource set.

Based on this implementation, the first frequency is constrained to be determined based on at least one of the subcarrier spacing, the first gap, the second gap, the third gap, or the quantity N of SSBs included in the first frequency domain resource set, so that the first SSB is located at a preferred frequency position in the first frequency domain resource, and each SSB is mapped as evenly as possible when a requirement of an occupancy channel bandwidth (occupancy channel bandwidth, OCB) regulation is met, to reduce MPR.

With reference to the second aspect or the third aspect, in some implementations, the first frequency is any one of a plurality of SSB candidate frequencies in the first frequency domain resource set, and the plurality of SSB candidate frequencies are determined based on a bandwidth of the first SSB and a frequency gap between two adjacent SSBs.

With reference to the second aspect or the third aspect, in some implementations, the first frequency $f_{SSB1}$ satisfies:

$$f_{SSB1} = f_1 + G_1 + M_{SSB}/2 + n \cdot (G + M_{SSB}),$$

where

$f_1$ represents the start frequency of the first frequency domain resource set, $M_{SSB}$ represents the bandwidth of the first SSB, $G_1$ represents a bandwidth occupied by the first gap, the first gap is the frequency gap between the start frequency of the first frequency domain resource set and the start frequency of the SSB with the lowest frequency in the first frequency domain resource set, G represents a bandwidth occupied by the second gap, the second gap is a frequency gap between two adjacent SSBs in the first frequency domain resource set, a value of n is any integer from 0 to N-1, N is the quantity of SSBs included in the first frequency domain resource set, and N is an integer greater than or equal to 2.

Based on this implementation, a subset of a preferred candidate position of an ARFCN of the first SSB is constrained, to completely map all SSBs, so as to maximize transmission performance of a receiver machine.

With reference to the second aspect or the third aspect, in some implementations, the first frequency $f_{SSB1}$ satisfies:

$$f_1 + G_1 + M_{SSB}/2 \leq f_{SSB1} \leq f_1 + N_{RBset1} - 1 - M_{SSB}/2;$$

or

$$f_1 + G_1 + M_{SSB}/2 \leq f_{SSB1} \leq f_1 + G_1 + M_{SSB}/2 + (N-1) \cdot (G + M_{SSB});$$

or

$$f_1 + M_{SSB}/2 \leq f_{SSB1} \leq f_1 + N_{RBset1} - 1 - M_{SSB}/2;$$

or

$$f_1 + M_{SSB}/2 \leq f_{SSB1} \leq f_1 + M_{SSB}/2 + (N-1) \cdot (G + M_{SSB}),$$

where

$f_1$ represents the start frequency of the first frequency domain resource set, $M_{SSB}$ represents the bandwidth of the first SSB, G represents the bandwidth occupied by the second gap, the second gap is a frequency gap between two adjacent SSBs in the first frequency domain resource set, $G_1$ represents the bandwidth occupied by the first gap, the first gap is the frequency gap between the start frequency of the first frequency domain resource set and the start frequency of the SSB with the lowest frequency in the first frequency domain resource set, and $N_{RBset1}$ represents a bandwidth occupied by the first frequency domain resource set.

Based on this implementation, the first frequency $f_{SSB1}$ is constrained, so that the first SSB and other N-1 second SSB signals used for synchronization are placed on a minimally constrained position subset, to completely map the first SSB and as many second SSBs as possible, so as to improve transmission performance of the receiver machine.

With reference to the second aspect or the third aspect, in some implementations, N-1 third frequencies are determined based on the first frequency, where the N-1 third frequencies are frequencies of N-1 second SSBs, the first SSB and the N-1 second SSBs are included in the first frequency domain resource set, and N is an integer greater than or equal to 2.

Based on this implementation, the other N-1 second SSBs in the first frequency domain resource set may be sequentially determined based on the determined first frequency.

With reference to the second aspect or the third aspect, in some implementations, the third frequency $f_{SSB2}$ satisfies:

$$f_{SSB2} = f_{SSB1} + k \cdot (G + M_{S-SSB}),$$

where

$f_{SSB1}$ indicates the first frequency, and k is an integer.

Based on this implementation, a subset of a preferred candidate position of an ARFCN of the second SSB is constrained, to completely map all second SSBs, so as to maximize transmission performance of a receiver machine.

With reference to the second aspect or the third aspect, in some implementations, the third frequency is any one or more of a plurality of SSB candidate frequencies in the first frequency domain resource set, and the plurality of SSB candidate frequencies are determined based on a bandwidth of the first SSB and a frequency gap between two adjacent SSBs.

With reference to the second aspect or the third aspect, in some implementations,

when units of $G_1$, $G$, and $G_2$ are PRB,

$$G_1 + N \cdot M_{SSB} + (N - 1) \cdot G + G_2 \leq N_{RBset1},$$

or
when units of $G_1$, $G$, and $G_2$ are RE,

$$G_1/N_{SC}^{RB} + N \cdot M_{SSB} + (N - 1) \cdot G/N_{SC}^{RB} + G_2/N_{SC}^{RB} \leq N_{RBset1},$$

or
when units of $G_1$, $G$, and $G_2$ are 15 kHz,

$$G_1/(2^{\mu} N_{SC}^{RB}) + N \cdot M_{SSB} + (N - 1) \cdot G/(2^{\mu} N_{SC}^{RB}) + G_2/(2^{\mu} N_{SC}^{RB}) \leq N_{RBset1},$$

where

$G_1$ represents the bandwidth occupied by the first gap, the first gap is the frequency gap between the start frequency of the first frequency domain resource set and the start frequency of the SSB with the lowest frequency in the first frequency domain resource set, G represents the bandwidth occupied by the second gap, the second gap is a frequency gap between two adjacent SSBs in the first frequency domain resource set, $G_2$ represents a bandwidth occupied by the third gap, the third gap is the frequency gap between the end frequency of the first frequency domain resource set and the end frequency of the SSB with the highest frequency in the first frequency domain resource set, $M_{SSB}$ represents the bandwidth of the first SSB, $N_{RBset1}$ represents the bandwidth occupied by the first frequency domain resource set, $N_{SC}^{RB}$ represents a quantity of subcarriers included in one resource block RB, $\mu$ represents the subcarrier spacing at which the first SSB is sent, N is the quantity of SSBs included in the first frequency domain resource set, and N is an integer greater than or equal to 2.

Based on this implementation, a relationship among the first gap, the second gap, the third gap, the bandwidth of the first SSB, and the bandwidth occupied by the first frequency domain resource set in the first frequency domain resource set is constrained, to map the plurality of SSBs as evenly as possible when an OCB requirement is met.

With reference to the second aspect, in an implementation of the second aspect, the first SSB is mapped at the first frequency; and the N-1 second SSBs are mapped on the first frequency domain resource set at the second gap based on the first frequency, where the second gap is a frequency gap between two adjacent SSBs in the first frequency domain resource set, N is the quantity of SSBs included in the first frequency domain resource set, and N is an integer greater than or equal to 2.

With reference to the third aspect, in an implementation of the third aspect, the first SSB is received or demapped at the first frequency; and at least one of the N-1 second SSBs is received or demapped on the first frequency domain resource set at the second gap based on the first frequency, where the second gap is a frequency gap between two adjacent SSBs in the first frequency domain resource set, N is the quantity of SSBs included in the first frequency domain resource set, and N is an integer greater than or equal to 2.

With reference to the second aspect or the third aspect, in some implementations, a start frequency of a third SSB is the start frequency of the first frequency domain resource set, the third SSB belongs to the N-1 second SSBs, and a bandwidth occupied by the third SSB is less than the bandwidth occupied by the first SSB; and/or an end frequency of a fourth SSB is the end frequency of the first frequency domain resource set, the fourth SSB belongs to the N-1 second SSBs, and a bandwidth occupied by the fourth SSB is less than the bandwidth occupied by the first SSB.

With reference to the second aspect or the third aspect, in some implementations, a start frequency of a third SSB is not the start frequency of the first frequency domain resource set, the third SSB belongs to the N-1 second SSBs, and a bandwidth occupied by the third SSB is less than the bandwidth occupied by the first SSB; and/or an end frequency of a fourth SSB is not the end frequency of the first frequency domain resource set, the fourth SSB belongs to the N-1 second SSBs, and a bandwidth occupied by the fourth SSB is less than the bandwidth occupied by the first SSB.

With reference to the second aspect or the third aspect, in some implementations, when a channel occupation requirement is met, the third SSB belongs to the N-1 second SSBs; and/or the fourth SSB belongs to the N-1 second SSBs.

With reference to the second aspect or the third aspect, in some implementations, the start frequency of the third SSB is the start frequency of the first frequency domain resource set, the third SSB does not belong to the N-1 second SSBs, and the bandwidth occupied by the third SSB is less than the bandwidth occupied by the first SSB; and/or the end frequency of the fourth SSB is the end frequency of the first frequency domain resource set, the fourth SSB does not belong to the N-1 second SSBs, and the bandwidth occupied by the fourth SSB is less than the bandwidth occupied by the first SSB.

With reference to the second aspect or the third aspect, in some implementations, when the channel occupation requirement is met, the third SSB does not belong to the N-1 second SSBs; and/or the fourth SSB does not belong to the N-1 second SSBs.

With reference to the second aspect or the third aspect, in some implementations, that the first frequency domain resource set includes all the subcarriers that carry the first SSB includes: The first frequency is not located in a guard band between two adjacent frequency domain resource sets in the BWP; and/or a resource element RE of the first SSB is not located in a guard band between two adjacent frequency domain resource sets in the BWP.

With reference to the second aspect or the third aspect, in some implementations, an SSB is a sidelink synchronization signal block S-SSB.

With reference to the second aspect or the third aspect, in some implementations, the BWP in a synchronization time domain unit includes M frequency domain resource sets, the M frequency domain resource sets include the first frequency domain resource set and M-1 second frequency domain resource sets, the synchronization time domain unit includes a time domain unit of the first SSB, the second frequency domain resource set includes q fifth SSBs, and M and q are positive integers greater than or equal to 2.

With reference to the second aspect or the third aspect, in some implementations, frequency positions of the q fifth SSBs in the second frequency domain resource set are in one-to-one correspondence with and are the same as frequency positions of the N SSBs in the first frequency domain resource set, where q=N.

With reference to the second aspect or the third aspect, in some implementations, the frequency positions of the q fifth SSBs in the second frequency domain resource set are predefined or configured by using signaling.

With reference to the second aspect or the third aspect, in some implementations, a bandwidth position that is of an $r^{th}$ SSB in a $j^{th}$ frequency domain resource set in the M frequency domain resource sets and that is in the BWP is determined based on one or more of the following parameters:

a subcarrier spacing;
a first bandwidth, where the first bandwidth is the bandwidth of the first frequency domain resource set, or the first bandwidth is a bandwidth of the second frequency domain resource set;
the second gap, where the second gap is a frequency gap between two adjacent SSBs in the first frequency domain resource set;

a fourth gap, where the fourth gap is a frequency gap between the first frequency domain resource set and the second frequency domain resource set, or a frequency gap between two adjacent second frequency domain resource sets;

an index of the first frequency domain resource set in the M frequency domain resource sets; or

an index of the second frequency domain resource set in the M frequency domain resource sets, where

$j$ is an integer greater than or equal to 1 and less than or equal to M, and $r$ is a positive integer less than or equal to q.

With reference to the second aspect or the third aspect, in some implementations, a frequency position $f_{r,j}$ that is of the $r$th SSB in the $j$th frequency domain resource set in the M frequency domain resource sets and that is on a first carrier or in the BWP satisfies the following condition:

$$f_{r,j} = f_{S-SSB_r} + (j - i) \cdot (N_{RBset} + N_{GB}),$$

where

$f_{SSB_r}$ represents a frequency of an $r$th SSB in the first frequency domain resource set, $i$ represents the index of the first frequency domain resource set in the M frequency domain resource sets, $j$ represents the index of the second frequency domain resource set in the M frequency domain resource sets, $r$ represents an index of an $r$th SSB in the $N$ SSBs in the first frequency domain resource set, and/or $r$ represents an index of an $r$th SSB in the q fifth SSBs in the second frequency domain resource set, $N_{RBset}$ is the first bandwidth, $N_{GB}$ is the fourth gap, and $r$ is a positive integer less than or equal to q.

Optionally, the first carrier may include one or more BWPs.

With reference to the second aspect, in some implementations of the second aspect, an SSB is sent on the M frequency domain resource sets of the synchronization time domain unit.

With reference to the second aspect, in some implementations of the second aspect, before the SSB is sent on the M frequency domain resource sets of the synchronization time domain unit, the method further includes: receiving indication information, where the indication information indicates to send the SSB on the M frequency domain resource sets of the synchronization time domain unit.

With reference to the third aspect, in some implementations of the third aspect, an SSB is sent on the M frequency domain resource sets of the synchronization time domain unit.

With reference to the third aspect, in some implementations of the third aspect, before the SSB is sent on the M frequency domain resource sets of the synchronization time domain unit, the method further includes: sending indication information, where the indication information indicates to send the SSB on the M frequency domain resource sets of the synchronization time domain unit.

Based on this implementation, a frequency position of an SSB in one or more other non-synchronization resource sets (namely, second resource sets) may be determined based on a frequency of an SSB in a synchronization resource set (namely, a first resource set), and an SSB signal is provided for an SLU to ensure network-wide synchronization; and the SSB is provided for each resource set, so that each resource set has a synchronization opportunity, to improve transmission synchronization and transmission performance between devices.

According to a fourth aspect, a communication apparatus is provided, including: a processing unit, configured for a first device to determine a first frequency domain resource set in a first time unit, where the first frequency domain resource set includes a frequency domain resource of a synchronization signal used for synchronization, the first frequency domain resource set is included in M frequency domain resource sets that carry a first message, M is a quantity of frequency domain resource sets occupied by the first message in a bandwidth part BWP, N is a maximum quantity of frequency domain resource sets used for sending a synchronization signal in the BWP, M is less than or equal to N, and N is an integer greater than or equal to 2; and the processing unit is further configured for the first device to determine a transmit power for the first message based on a maximum transmit power of the first device and a first parameter, where the transmit power for the first message does not exceed a difference between the maximum transmit power of the first device and the first parameter; and a transceiver unit, configured for the first device to send the first message in the first time unit based on the transmit power for the first message.

The transceiver unit may perform receiving and sending in the first aspect, and the processing unit may perform processing other than receiving and sending in the first aspect.

According to a fifth aspect, a communication apparatus is provided, including: a processing unit, configured to obtain a first frequency of a first SSB used for synchronization, where the first frequency is located in a first frequency domain resource set, the first frequency domain resource set includes all subcarriers that carry the first SSB, and the first frequency domain resource set is located in a bandwidth part BWP; and a transceiver unit, configured to send the first SSB based on the first frequency.

The transceiver unit may perform receiving and sending in the second aspect, and the processing unit may perform processing other than receiving and sending in the second aspect.

According to a sixth aspect, a communication apparatus is provided, including: a processing unit, configured to obtain a first frequency of a first SSB used for synchronization, where the first frequency is located in a first frequency domain resource set, the first frequency domain resource set includes all subcarriers that carry the first SSB, and the first frequency domain resource set is located in a bandwidth part BWP; and a transceiver unit, configured to receive the first SSB based on the first frequency.

The transceiver unit may perform receiving and sending in the third aspect, and the processing unit may perform processing other than receiving and sending in the third aspect.

According to a seventh aspect, a communication apparatus is provided, including a transceiver, a processor, and a memory. The processor is configured to control the transceiver to send and receive signals. The memory is configured to store a computer program. The processor is configured to invoke the computer program from the memory and run the computer program, so that the communication apparatus performs the method according to any one of the possible implementations of the first aspect to the third aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to an eighth aspect, a communication system is provided, including a network device, a first device, and a second device. The first device is configured to perform the method in any one of the possible implementations of the first aspect or the second aspect, and the second device is configured to perform the method in any one of the possible implementations of the third aspect.

According to a ninth aspect, a computer-readable storage medium is provided. The computer-readable storage medium stores a computer program or code. When the computer program or code is run on a computer, the computer is enabled to perform the method in any one of the possible implementations of the first aspect to the third aspect.

According to a tenth aspect, a chip is provided, including at least one processor. The at least one processor is coupled to a memory. The memory is configured to store a computer program. The processor is configured to invoke the computer program from the memory and run the computer program, so that an apparatus on which the chip system is installed performs the method according to any one of the possible implementations of the first aspect to the third aspect.

The chip may include an input circuit or interface for sending information or data and an output circuit or interface for receiving information or data.

According to an eleventh aspect, a computer program product is provided. The computer program product includes computer program code. When the computer program code is run by an apparatus, the apparatus is enabled to perform the method according to any one of the possible implementations of the first aspect to the third aspect.

## BRIEF DESCRIPTION OF DRAWINGS

FIG. 1 is a diagram of a wireless communication system applicable to an embodiment of this application;

FIG. 2 is a schematic flowchart of a communication method 200 according to an embodiment of this application;

FIG. 3 is a schematic flowchart of a communication method 300 according to an embodiment of this application;

FIG. 4 is a diagram of a BWP including a plurality of RB sets according to an embodiment of this application;

FIG. 5 to FIG. 7 are diagrams of mapping a plurality of SSBs on one RB set according to an embodiment of this application;

FIG. 8 is a diagram of a structure of a communication apparatus 1000 according to an embodiment of this application;

FIG. 9 is a diagram of a structure of a communication apparatus 2000 according to an embodiment of this application; and

FIG. 10 is a diagram of a structure of a chip system 3000 according to an embodiment of this application.

## DESCRIPTION OF EMBODIMENTS

The following describes technical solutions of embodiments in this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation (6th generation, 6G) mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. The V2V refers to communication between vehicles. The V2P refers to communication between a vehicle and a person (including a pedestrian, a bicyclist, a driver, a passenger, or the like). The V2I refers to communication between a vehicle and an infrastructure. The infrastructure is, for example, a road side unit (road side unit, RSU) or a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU may provide timing synchronization and resource scheduling for a vehicle that communicates with the base station-type RSU. The V2N refers to communication between a vehicle and a network device. It can be understood that the foregoing descriptions are examples, and are not limited in embodiments of this application. For example, V2X may further include NR system-based V2X communication in current 3GPP Rel-16 and later releases.

The terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and largesized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be installed in the terminal device. In this embodiment of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node.

In embodiments of this application, an apparatus configured to implement a function of the network device may be a network device; or may be an apparatus that can support the network device in implementing the function, for example, a chip system or a chip, where the apparatus may be installed in the network device. In this embodiment of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

It should be noted that the technical solutions of this application are mainly applied to a sidelink transmission scenario, and a used frequency band includes but is not limited to an unlicensed spectrum. The unlicensed spectrum includes a frequency band near 2.4 gigahertz (GHz), a frequency band near 5.8 GHz, and the like. Optionally, in embodiments of this application, the terminal device and the access network device can perform wireless communication (for example, perform uplink information or downlink information transmission) through an unlicensed spectrum resource. The communication system may use a licensed-assisted access (licensed-assisted access, LAA) technology, dual connectivity (dual connectivity, DC) technology, a standalone (standalone) technology, or the like.

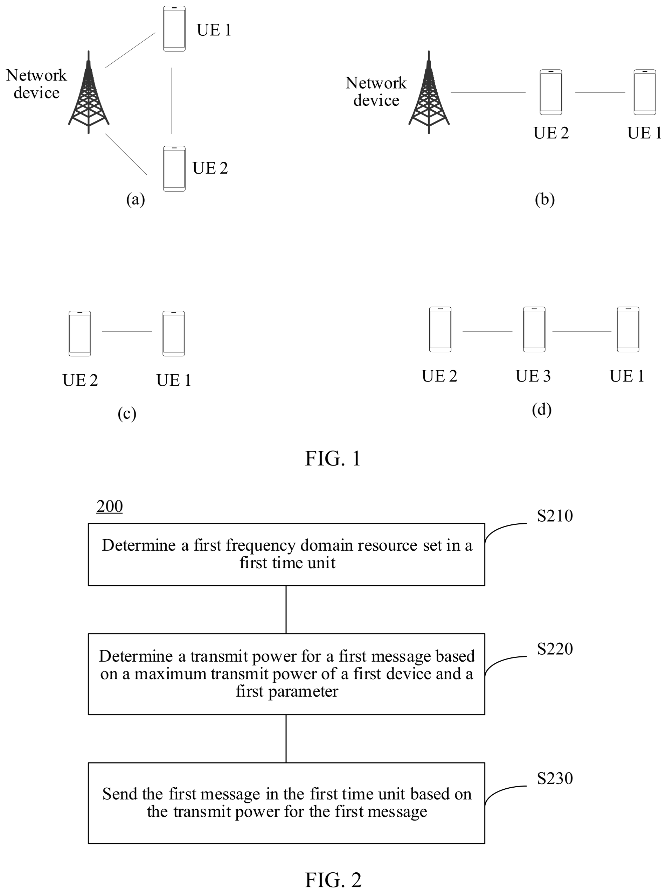

A communication system applicable to embodiments of this application is briefly described below with reference to FIG. 1.

FIG. 1 is a diagram of a wireless communication system applicable to an embodiment of this application. As shown in FIG. 1, the wireless communication system may include at least one terminal device, for example, a UE 1, a UE 2, and a UE 3 shown in FIG. 1. Optionally, the wireless communication system may further include at least one network device, for example, a network device shown in FIG. 1.

The network device and the terminal device may communicate with each other. For example, the network device and the terminal device may communicate with each other through a Uu interface, and a link for communication between the network device and the terminal device may be denoted as a Uu link. As shown in (a) in FIG. 1, the network device and the UE 1 may directly communicate with each other. As shown in (b) in FIG. 1, the network device and the UE 1 may alternatively communicate with each other through the UE 2. Similarly, the network device and the UE 2 may directly communicate with each other, or the network device and the UE 2 may communicate with each other through the UE 1. It can be understood that, the Uu link represents a connection relationship between the terminal device and the network device, and is a logical concept rather than a physical entity. A main link is merely a name for differentiation, and a specific name of the main link does not constitute any limitation on the protection scope of this application.

Terminal devices may also communicate with each other. For example, the terminal devices may directly communicate with each other. As shown in (a) to (c) in FIG. 1, the UE 1 and the UE 2 may directly communicate with each other. For another example, the terminal devices may communicate with each other through another device, for example, a network device or a terminal device. As shown in (a) in FIG. 1, the UE 1 and the UE 2 may communicate with each other through the network device. As shown in (d) in FIG. 1, the UE 1 and the UE 2 may communicate with each other through the UE 3. An interface for communication between terminal devices may be denoted as a proximity-based services communication 5 (proximity-based services communication 5, PC5) interface. A link for communication between terminal devices may be denoted as a sidelink SL, and communication between terminal devices may also be denoted as SL communication. The sidelink may also be referred to as a side link, a secondary link, or the like. It can be understood that, the sidelink represents a connection relationship between the terminal devices, and is a logical concept rather than a physical entity. A sidelink is merely a name for differentiation, and a specific name of the sidelink does not constitute any limitation on the protection scope of this application.

In an example, SL communication between the terminal devices may be used in an internet of vehicles or an intelligent transportation system (intelligent transportation system, ITS), for example, the V2X communication described above.

Optionally, SL communication between the terminal devices may be performed with network coverage, or may be performed without network coverage. As shown in (a) and (b) in FIG. 1, the UE 1 and another UE may communicate with each other with network coverage. Alternatively, as shown in (c) and (d) in FIG. 1, the UE 1 and another UE may communicate with each other outside a network coverage area.

Optionally, configuration information used during SL communication between the terminal devices, for example, a time-frequency resource used during the SL communication between the terminal devices, may be configured or scheduled by the network device, or may be autonomously selected by the terminal device. This is not limited.

It can be understood that FIG. 1 is merely a simplified diagram used as an example for ease of understanding. The wireless communication system may further include other network devices or other terminal devices not drawn in FIG. 1. Embodiments of this application are applicable to any communication scenario in which a transmit-end device communicates with a receive-end device. In other words, embodiments of this application are applicable to an uplink, a downlink, a relay link, or a sidelink communication scenario. For example, uplink communication is communication between a terminal device and a network device, downlink communication is communication between a network device and a terminal device, and sidelink communication is communication between terminal devices.

It should be noted that a specific structure of an entity for performing a method provided in embodiments of this application is not particularly limited in embodiments of this application, provided that the entity can run a program that records code for the method provided in embodiments of this application to perform communication according to the method provided in embodiments of this application. For example, the method provided in embodiments of this application may be performed by a terminal device or a functional module that is in a terminal device and that can invoke the program and execute the program.

For ease of understanding embodiments of this application, terms or technologies in this application are briefly described first.

1. Licensed spectrum and unlicensed spectrum

Spectra used in a wireless communication system are classified into two types: a licensed spectrum (licensed spectrum) and an unlicensed spectrum (unlicensed spectrum). In the licensed spectrum, a UE may use a spectrum resource based on scheduling performed by a network device. In the unlicensed spectrum, a communication device may use a spectrum resource through contention, and the unlicensed spectrum may also be referred to as a shared spectrum. SL communication on the unlicensed spectrum may be referred to as a sidelink on the unlicensed spectrum (sidelink unlicensed, SL-U). NR cellular communication on the unlicensed spectrum may be referred to as NR-U. A bandwidth of the unlicensed spectrum is some defined frequencies, and may vary slightly in different regions and countries due to requirements of policies and regulations. For example, the unlicensed spectrum includes 900 MHz (for example, all or a part of 839 MHz to 928 MHz), 2.4 GHz (for example, all or a part of 2401 MHz to 2495 MHz), 3.6 GHz (for example, all or a part of 3655 MHz to 3695 MHz), 5 GHz (for example, all or a part of 5030 MHz to 5990 MHz), or 6 GHz (for example, all or a part of 5945 MHz to 7115 MHz).

Currently, the 3GPP has defined two frequency bands associated with V2X: a frequency band n38 (2570 MHz to 2620 MHz) and a frequency band n47 (5855 MHz to 5925 MHz). When the n38 frequency band is used to support a V2X SL service, this frequency band is dedicated for NR V2X in a specific area. The n47 frequency band is generally known as an intelligent transportation system (ITS) frequency band, and no related network device is deployed on this frequency band.

In addition to the foregoing two frequency bands, currently, a technology for an SL system on a shared spectrum is currently under research in R18, and the shared spectrum includes frequency bands n46, n96, and n102. A plurality of types of terminal devices exist on the shared frequency band. Therefore, to avoid collision and interference between different users, a transmission node needs to use a spectrum resource through contention, for example, contend for a channel through listen-before-talk LBT. Before accessing a channel and starting to send data, a UE needs to sense whether the channel is idle (idle). If the channel has remained idle for a specific period of time, the UE can occupy the channel. If the channel is not idle, the UE can occupy the channel only after the channel is restored to being idle.

2. Synchronization signal block (synchronization signal block, SSB)

Synchronous communication requires that transmit and receive ends have synchronization clock signals or timing information with a same frequency and phase. Optionally, the SSB includes a reference signal including a specific sequence and/or a control channel carrying control information. The SSB is sent to enable the transmit and receive ends to be synchronized. Then, the transmit and receive ends perform sending and receiving under control of a synchronization clock.

For example, a synchronization signal includes but is not limited to a sidelink synchronization signal S-SSB. The S-SSB includes a primary synchronization signal S-PSS, a secondary synchronization signal S-SSS, and a sidelink broadcast channel PSBCH. For example, the S-SSB may be referred to as a synchronization signal, a sidelink synchronization signal, a sidelink signal, or the like. This is not limited in this application. It should be understood that the S-SSB may include a predetermined quantity of symbols in time domain and occupy a preset bandwidth in frequency domain. For example, the S-SSB includes 14 symbols in time domain, and occupies 20 PRBs in frequency domain. For another example, the S - *SSB* includes 13 or 11 symbols in time domain, and occupies 11 PRBs in frequency domain. The S-SSB may include an AGC symbol and/or an empty symbol in time domain, or may not include an AGC symbol and/or an empty symbol. This is not limited in this application.

For example, a frequency of the synchronization signal may be predefined, or may be configured or preconfigured by using signaling. In an example of the S-SSB, an ARFCN of the S-SSB is configured by using a higher-layer parameter sl-AbsoluteFrequencySSB. For example, a bandwidth occupied by the synchronization signal (for example, the S-SSB) is predefined, for example, 11 PRBs, 20 PRBs, or another value. This is not limited in this application.

In embodiments of this application, the bandwidth occupied by the synchronization signal, for example, the S-SSB, is predefined, for example, 11 PRBs, 20 PRBs, or another value. This is not limited in this application.

The technical solutions of this application may be applied to uplink, downlink, relay link, or sidelink communication. Optionally, in the uplink, the SSB may be an uplink random access channel. Optionally, in the downlink, the SSB may be a downlink synchronization channel, a downlink synchronization signal, or a downlink synchronization signal block. Optionally, in the relay link, the SSB may be a synchronization signal and/or a channel between relay links. Optionally, in the sidelink, the SSB may be a sidelink SSB, namely, an S-SSB.

Without a loss of generality, for ease of understanding and description, in embodiments of this application, a sidelink communication scenario is used as an example to describe an implementation solution of this application. It should be understood that for an implementation in an uplink, a downlink, or a relay link communication scenario, refer to related descriptions of the sidelink communication scenario in this application.

This application is applicable to the sidelink communication scenario. Therefore, all synchronization signals mentioned below are S-SSBs. In this application, the S-SSB may be referred to as a synchronization signal, a synchronization signal block, or the like. It should be understood that a name of the S-SSB is merely an example, and does not constitute any limitation on the technical solutions of this application. Optionally, the S-SSB includes a sidelink primary synchronization signal S-PSS, a sidelink secondary synchronization signal S-SSS, and a physical sidelink broadcast channel PSBCH. Optionally, a bandwidth of the S-SSB is predefined, configured, or preconfigured. For example, the bandwidth of the S-SSB is 11 PRBs, or the bandwidth of the S-SSB is 20 PRBs. Optionally, a quantity of symbols occupied by the S-SSB is also predefined, configured, or preconfigured. For example, for a normal CP, the S-SSB may occupy 14 symbols, and for an extended CP, the S-SSB may occupy 12 symbols. For another example, for either a normal CP or an extended CP, the S-SSB occupies four symbols. Optionally, the S-SSB may further include a symbol used for automatic gain control AGC.

3. SL resource pool (resource pool)

In NR, SL transmission is performed based on a resource pool. Each resource pool includes one or more subchannels (subchannel). Frequency domain resources (namely, quantities of physical resource blocks (physical resource block, PRB)) occupied by subchannels in one resource pool are the same, and frequency domain resources occupied by subchannels in different resource pools may be different.

Optionally, the resource pool may further include positions and a quantity of slots occupied for SL transmission in time domain.

It should be noted that, in embodiments of this application, a manner of determining a resource in a resource selection window may be performed in one resource pool, or may be performed in a plurality of resource pools. This is not limited in this application.

It should be understood that the resource pool may be a physical concept, or may be a logical concept. One resource pool includes a plurality of physical resources, and any physical resource is used for data transmission. Each UE needs to select one resource from the resource pool during data transmission. The resource determining process includes the following two cases:

(1) The UE selects, based on indication information of a network device since the UE is controlled by the network device, a resource from the resource pool for data transmission. This is also referred to as a mode 1.

(2) The UE autonomously selects one resource from the resource pool for data transmission. This is also referred to as a mode 2. To be specific, the UE has an opportunity for autonomous resource determining and resource allocation. The UE may sense an occupancy status of a spectrum, exclude some occupied resources or resources subject to high interference, and select a transmission resource from idle resources or resources subject to low interference.

4. Time domain unit and frequency domain unit

Data or information may be carried in a time-frequency resource.

In time domain, the time-frequency resource may include one or more time domain units (which may also be referred to as time units).

In embodiments of this application, one time unit may include several time domain resources. The time domain unit is, for example, a radio frame (radio frame, RF), and a time domain resource included in the time domain unit is, for example, a subframe (subframe), a frame, a half-subframe or a half-frame, a slot (slot), a sub-slot (sub-slot), a mini-slot (mini-slot), a partial slot (partial slot), or an orthogonal frequency division multiplexing (orthogonal frequency division multiplexing, OFDM) symbol (symbol). Alternatively, the time domain unit may be a set of one or more time domain resources. For example, the time domain unit is one or more OFDM symbols in one slot. For example, a quantity of the one or more OFDM symbols is 6, 7, 12, or 14. The one or more time units may be consecutive or discrete in terms of time. Optionally, in embodiments of this application, the time domain resource may also be referred to as a sub time domain unit, or the "time domain resource" and the "sub time domain unit" may be a same concept, and the two are interchangeable. In addition, duration of the slot may be related to a subcarrier spacing. For example, when the subcarrier spacing is 15 kilohertz (kHz), duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it can be learned through deduction that, when the subcarrier spacing is $15*2^\mu$, duration of one slot is $2-\mu$ ms, where $\mu=0, 1, 2, ...,$ and the like.

In frequency domain, the time-frequency resource may include one or more frequency domain units. A frequency domain unit may be a resource element (resource element, RE), a resource block RB, a subchannel (subchannel), a resource pool (resource pool), a resource set (RB set), a bandwidth (bandwidth), a BWP, a carrier (carrier), a channel (channel), an interlace (interlace) RB, or the like. Optionally, one carrier may include one or more BWPs. Optionally, one BWP may include one or more resource pools. One BWP may include one or more RB sets. Optionally, one resource pool may include one or more RBs or subchannels. Optionally, one subchannel may include one or more RBs. One RB may include one or more REs. Optionally, in embodiments of this application, an RE may be equivalent to a subcarrier. In other words, one RE is one subcarrier, or one subcarrier is one RE.

5. COT

Channel occupancy refers to transmission performed by the UE on one or more channels after the UE performs a channel access process. If a UE obtains, through LBT, a right to use a channel, the UE may occupy the channel in a period of time, and the period of time may be referred to as the COT. The COT may be a time concept, that is, time of SL transmission; or may be a resource concept, that is, a time-frequency resource occupied for SL transmission.

Transmission of the UE cannot exceed a limit of maximum channel occupancy time (maximum channel occupancy time, MCOT), which is denoted as $T_{m\,cot,\,p}$. For different channel access priority classes (channel access priority class, CAPC), a value of $T_{m\,cot,\,p}$ varies, as shown in Table 1 or Table 2. $CW_p$ in Table 1 and Table 2 is a contention window (contention window), $CW_{min,p}$ is a minimum value of the contention window, and $CW_{max,p}$ is a maximum value of the contention window.

Table 1

| CAPC (p) | $m_p$ | $CW_{min,p}$ | $CW_{max,p}$ | $T_{m\,cot,\,p}$ | Value of $CW_p$ |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63} |
| 4 | 7 | 15 | 1023 | 8 ms or 10 ms | {15, 31, 63, 127, 255, 511, 1023} |

Table 2

| CAPC (p) | $m_p$ | $CW_{min,p}$ | $CW_{max,p}$ | $T_{cot,\,p}$ | Value of $CW_p$ |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

The foregoing briefly describes terms used in this application. Details are not described in the following embodiments. In addition, the foregoing descriptions of the terms are merely descriptions for ease of understanding, and do not limit the protection scope of embodiments of this application.

In an NR sidelink, in a bandwidth of a sidelink BWP, a network side configures, for a terminal device, a frequency for S-SSB transmission, so that the terminal device can send, on the BWP, an S-SSB that occupies 11 PRBs in terms of bandwidth. It should be understood that, all frequency domain resources other than the entire S-SSB signal are vacant and are not used to send a signal. In an unlicensed spectrum, the terminal device needs to select, from a resource pool, a physical resource used for data transmission. For example, the terminal device may preempt a channel through listen-before-talk (listen-before-talk, LBT) or share a resource obtained by another terminal device by preempting a channel, to perform data transmission. For example, in an SL-U, COT obtained by a UE through Type 1 LBT includes a plurality of RB sets. If an included RB set 2 is used for transmission of an S-SSB used for synchronization, and there is no S-SSB on other RB sets, transmission on the other RB sets is interrupted, causing losses of the COT of the UE on these RB sets, and affecting transmission performance. After one Type 1 LBT, when a synchronization signal S-SSB is sent on one RB set included in the COT of the UE, a transmit power on the synchronization RB set is 23 dBm. After another Type 1 LBT, when the synchronization signal S-SSB is sent on four RB sets included in the COT of the UE, a transmit power on an RB set that is used for synchronization and that is in the four RB sets is 17 dBm. This may result in a problem that a transmit power on the RB set used for sending the synchronization signal is sometimes high and sometimes low due to different Type 1 LBT results. This may be referred to as a problem of fluctuation in the transmit power for the S-SSB. The fluctuation in the transmit power for the S-SSB causes the UE to continuously switch synchronization sources during synchronization, causing communication interruption and unnecessary losses of transmission performance. Therefore, how to avoid fluctuation in a signal power of the UE for sending the S-SSB is a problem to be urgently resolved.

In view of this, this application provides a communication method and an apparatus. A transmit power for a synchronization signal transmitted on a first frequency domain resource set (for example, a synchronization RB set) is determined, to avoid fluctuation in the power for the synchronization signal, ensure stability of a transmit power during data transmission on the first frequency domain resource set to improve system transmission performance, and avoid fluctuation in the transmit power for the synchronization signal to improve transmission performance.

For ease of understanding of embodiments of this application, the following descriptions are provided.

First, in this application, unless otherwise specified or there is a logic conflict, terms and/or descriptions between different embodiments are consistent and may be mutually referenced, and technical features in different embodiments may be combined based on an internal logical relationship thereof, to form a new embodiment.

Second, in this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one of a, b, and c may represent a, or b, or c, or a and b, or a and c, or b and c, or a, b, and c. Each of a, b, and c may be in a singular form or a plural form.

Third, in this application, "first", "second", and various numbers are used for differentiation for ease of description, and are not used to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

Fourth, in this application, the terms "include", "have", and any variants thereof are intended to cover a non-exclusive inclusion. For example, a process, a method, a system, a product, or a device that includes a series of steps or units is not necessarily limited to those steps or units that are clearly listed, but may include other steps or units that are not clearly listed or are inherent to the process, method, product, or device.

Fifth, in this application, "indicate" may include "directly indicate" and "indirectly indicate". When a piece of indication information indicates A, the indication information may directly indicate A or indirectly indicate A, but it does not indicate that the indication information definitely carries A.

Sixth, "protocols" in this application may be standard protocols in the communication field, for example, may include a 5G protocol, a new radio (new radio, NR) protocol, and a related protocol applied to a future communication system. This is not limited in this application. "Predefinition" may include definition in advance, for example, definition in a protocol. "Preconfiguration" may be implemented by pre-storing corresponding code or a corresponding table in a device, or may be implemented in another manner that may indicate related information. A specific implementation thereof is not limited in this application.

Seventh, in this application, a configuration may be a signaling configuration, or may be described as configuration signaling. For example, the signaling configuration is configured by using signaling sent by a base station, where the signaling may be a radio resource control (radio resource control, RRC) message, downlink control information (downlink control information, DCI), or a system information block (system information block, SIB). Optionally, the signaling configuration may alternatively be configured for a terminal device by using preconfigured signaling, or may be configured for a terminal device in a preconfiguration manner. The preconfiguration herein is to define or configure a value of a corresponding parameter in advance in a protocol manner, and store the value in the terminal device during communication with the terminal device. A preconfigured message may be modified or updated when the terminal device is connected to a network. Further optionally, the signaling configuration may be used to limit a value of a related parameter or configuration information to a resource pool on which the terminal device performs sending or receiving. The resource pool is a set of resources used for transmission on a specific carrier or bandwidth part. In embodiments of this application, a quantity M of frequency domain resource sets may be predefined in a standard, configured by a network device/another UE, preconfigured by a first device before delivery, or the like. This is not limited in this application.

Eighth, in this application, "communication" may also be described as "data transmission", "information transmission", "data processing", or the like. "Transmission" includes "sending" and "receiving".

The following describes in detail a synchronization resource selection, sending, and indication method provided in embodiments of this application with reference to the accompanying drawings. Embodiments provided in this application are applicable to any communication scenario in which a transmit-end device communicates with a receive-end device, for example, may be applied to the communication system shown in FIG. 1.

FIG. 2 is a schematic flowchart of a communication method 200 according to an embodiment of this application. As shown in FIG. 2, the method procedure may be performed by a first device and a second device, or may be performed by a module and/or a component (for example, a chip or an integrated circuit) that are installed in the first device and the second device and that have corresponding functions. This is not limited in this application. The following uses the first device and the second device as execution entities for description, and a plurality of following steps are included.

S210: The first device determines a first frequency domain resource set in a first time unit.

The first frequency domain resource set includes a frequency domain resource of a synchronization signal used for synchronization, the first frequency domain resource set is included in M frequency domain resource sets that carry a first message, M is a quantity of frequency domain resource sets occupied by the first message in a BWP, Q is a maximum quantity of frequency domain resource sets used for sending a synchronization signal in the BWP, M is less than or equal to Q, and Q is an integer greater than or equal to 2.

In this embodiment of this application, the first device is a synchronization source. Optionally, the synchronization source is a device that sends a synchronization signal to provide time and/or frequency synchronization references for a receiver machine of the synchronization signal. Optionally, the first device may be used as an example of the device that sends the synchronization signal.

It should be understood that the technical solution of this application is applicable to uplink and sidelink communication scenarios. The synchronization signal is used by the second device to perform synchronization, and the frequency domain resource of the synchronization signal is a frequency in the first frequency domain resource set. For example, an SSB sent at a frequency used for synchronization is referred to as an SSB used for synchronization.

For example, N represents a quantity of frequency domain resource sets (for example, RB sets) for sending an SSB in an SL-BWP; or N represents a quantity of frequency domain resource sets included in a resource pool, and the resource pool is located in the BWP; or N represents a quantity of resource block sets included in COT of the first device.

For example, M represents a quantity of frequency domain resource sets (for example, RB sets) that are actually used or occupied for sending an SSB in an SL-BWP. For example, M represents a quantity of resource block sets included in COT of the first device.

For example, Q represents a quantity of frequency domain resource sets (for example, RB sets) for sending an SSB in an SL-BWP; or Q represents a quantity of frequency domain resource sets included in a resource pool; or Q represents a quantity of resource block sets included in COT of the first device. Optionally, Q is a maximum quantity or an allowed quantity of frequency domain resource sets for sending the SSB.

For example, Q may be configured on a CC, an SL-BWP, or a resource pool. Q may be predefined, or may be configured or preconfigured by a network device. For example, the quantity Q of frequency domain resource sets may be predefined in a standard, configured by the network device/another UE, preconfigured by the first device before delivery, or the like. For example, if the network device configures five available frequency domain resource sets for the first device, a quantity of frequency domain resource sets subsequently determined by the first device based on a transmission requirement is less than or equal to 5.

In an implementation, the first device obtains COT, and the COT includes the M frequency domain resource sets. For example, the first device may obtain the COT through Type 1 LBT or Type 2 LBT. For a specific implementation, refer to a current solution for obtaining the COT. Details are not described herein.

For example, when M is greater than 1, the M frequency domain resource sets further include a second frequency domain resource set. For example, the first frequency domain resource set is referred to as a synchronization RB set, and the second frequency domain resource set is referred to as a non-synchronization RB set. In other words, the COT of the first device occupies one synchronization RB set. Optionally, the COT further includes one or more non-synchronization RB sets.

It should be understood that the first time unit is a time unit in which a first synchronization resource in the first frequency domain resource set is located. In other words, the first time unit is a time domain resource that is in the synchronization RB set and that is used for transmitting the synchronization SSB, and may also be referred to as a synchronization time unit or a synchronization slot.

It should be understood that the first time unit is a time unit in which a first synchronization resource in the first frequency domain resource set is located. In other words, the first time unit is a time domain resource that is in the synchronization RB set and that is used for transmitting the synchronization SSB. For example, when the first time unit is a slot, the first time unit in which the SSB is sent may be referred to as a synchronization time unit or a synchronization slot.

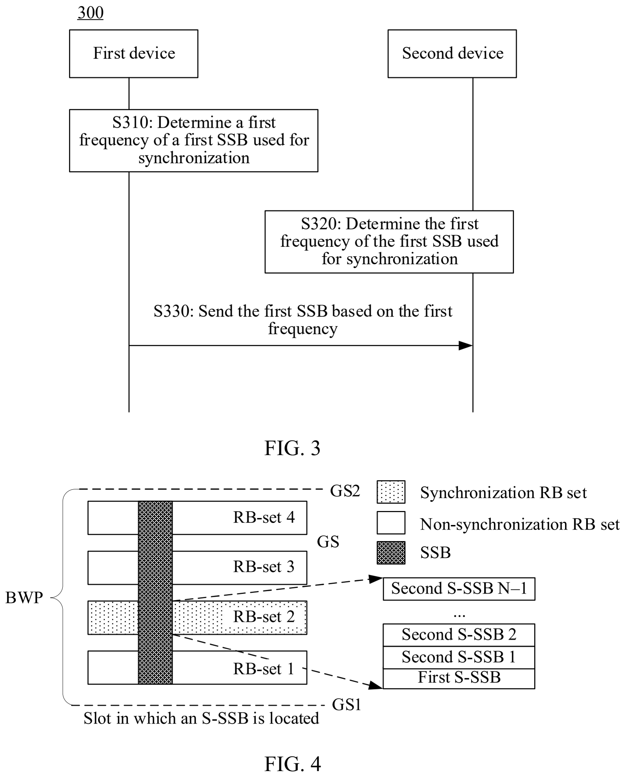

FIG. 4 is a diagram of a BWP including a plurality of RB sets according to an embodiment of this application. As shown in FIG. 4, a sidelink scenario is used as an example. It is assumed that a unit of a time domain resource is slot, and one slot (including 14 symbols) is used as a synchronization time unit (or referred to as a first time unit), for example, a slot in which an S-SSB is located, as shown in FIG. 4. A UE is a sending UE of a synchronization S-SSB. The BWP occupies four RB sets, that is, Q=4, including one synchronization RB set (for example, an RB set 2) and three non-synchronization RB sets (for example, an RB set 1, an RB set 3, and an RB set 4).

A slot in which an S-SSB in the synchronization RB set is located includes one S-SSB (namely, a first S-SSB) used for synchronization and N-1 S-SSB replicas (namely, N-1 second S-SSBs) used for channel occupancy, for example, N=9. For example, the S-SSB replica may be a primary synchronization signal of the S-SSB used for synchronization or a frequency domain resource set occupied by the primary synchronization signal, or may be a secondary synchronization signal of the S-SSB used for synchronization or a frequency domain resource set occupied by the secondary synchronization signal, or may be a PSBCH of the S-SSB used for synchronization and a frequency domain resource set occupied by the PSBCH. A second S-SSB 1, a second S-SSB 2, ..., and a second S-SSB N-1 (which may also be referred to as an S-SSB replica 1, an S-SSB replica 2, ..., and an S-SSB replica N-1) may be the same, or may be different. This is not limited in this application. To avoid COT interruption of the other non-synchronization RB sets, the UE may transmit an S-SSB-related signal (for example, S-PSS, S-SSS, or PSBCH) resource in synchronization slots of the non-synchronization RB sets in the BWP. For example, the UE may completely replicate or map the S-SSB used for synchronization and the N-1 S-SSB replicas used for channel occupancy in the synchronization RB set to the synchronization slots of the other three non-synchronization RB sets. Further, to avoid a problem of high peak to average power ratio (peak to average power ratio, PAPR) in an RB set in a synchronization slot of COT of the UE, the UE may scramble the S-SSB signal used for synchronization and the S-SSB replica signals used for channel occupancy in the four RB sets in the BWP. A specific scrambling manner may be specifically described below, and is not described herein. In addition, to avoid a problem of high peak to average power ratio PAPR between the plurality of other non-synchronization RB sets, the UE may further scramble the plurality of non-synchronization RB sets.

It should be noted that FIG. 4 is merely an example. In this application, a quantity of RB sets included in the BWP is not limited, and a relationship between a frequency domain position of a synchronization RB set and frequency domain positions of non-synchronization RB sets is not limited. For example, the synchronization RB set may be any one of the plurality of RB sets in the BWP.

S220: The first device determines a transmit power for the first message based on a maximum transmit power of the first device and a first parameter.

The transmit power for the first message does not exceed a difference between the maximum transmit power of the first device and the first parameter. A unit of the transmit power for the first message and a unit of the maximum transmit power of the first device are dBW or dBmW, and a unit of the first parameter is decibel dB.

For example, when the unit of the transmit power for the first message and the unit of the maximum transmit power of the first device are W or mW, the transmit power for the first message does not exceed a ratio of the maximum transmit power of the first device to the first parameter.

It should be understood that the unit of the transmit power may be decibel milliwatt (dBm), where dBm represents an absolute value of a power, and a conversion between any power P (mW) and x (dBm) satisfies: $x = 10 log_{10}(P/(1\ mW))$. Alternatively, a value of the transmit power may be represented by a logarithmic value (where a unit may be dBm). Alternatively, a value of the transmit power may be represented by a linear value (where a unit may be watt (W) or milliwatt (mW)). Optionally, the value of the transmit power may be a value on a single frequency domain transmission resource (for example, a PRB), or may be a value over an entire transmission bandwidth. Similarly, whether a power in this embodiment of this application is a logarithmic value or a linear value may be determined based on a unit of the power.

In an implementation, the transmit power for the first message is a transmit power of the first frequency domain resource set, a value of the first parameter is $\Delta$, $\Delta = A$, and $A = 10\ log_{10}(Q)$, or A is a power adjustment factor for sending the first message.

In another implementation, the transmit power for the first message is a transmit power of the M frequency domain resource sets, a value of the first parameter is $\Delta$, $\Delta = A - 10\ log_{10}(M)$, and $A = 10\ log_{10}(Q)$, or A is a power adjustment factor for sending the first message. The power adjustment factor is configured by using signaling or predefined.

Optionally, $\Delta$ may be determined in any one of the following manners:

(1) parameter configured on an SL-CC/SL-BWP; or
(2) parameter configured on a resource pool.

When the parameter $\Delta$ configured in (1) and (2) is in dBm, a dBm value of $\Delta$ is directly substituted into the foregoing formula, for example, $\Delta$ = 6 dBm.

When the parameter $\Delta$ configured in (1) and (2) indicates an integer Q, $\Delta$ = 10log$_2$(Q).

Optionally, $\Delta$ may be configured on a CC, an SL-BWP, or a resource pool.

For example, the first message includes a data channel and/or a synchronization channel (synchronization channel, SCH). The data channel is used for service data transmission, and includes a PSSCH, a physical uplink shared channel (physical uplink shared channel, PUSCH), and a physical downlink shared channel (physical downlink shared channel, PDSCH). This is not limited in this application.

In the following, in a sidelink scenario, the first device is a terminal device, and a manner of determining the transmit power for the first message is described separately by using examples of the first message being an S-SSB and a PSSCH.

In an implementation, when the first message is an S-SSB, the transmit power $P_{\text{S-SSB}}(i)$ for the first message satisfies any one of the following:

$$P_{\text{S-SSB}}(i) = min\left(P_{\text{CMAX}}, P_{\text{O,S-SSB}} + 10\, log_{10}\left(2^{\mu} \cdot M_{\text{RB}}^{\text{S-SSB}}\right) + \alpha_{\text{S-SSB}} \cdot PL\right) - \Delta \quad (1)$$

$$P_{\text{S-SSB}}(i) = min\left(P_{\text{CMAX}}, P_{MAX-PSD}, P_{\text{O,S-SSB}} + 10\, log_{10}\left(2^{\mu} \cdot M_{\text{RB}}^{\text{S-SSB}}\right) + \alpha_{\text{S-SSB}} \cdot PL\right) - \Delta$$
$$(1a)$$

$$P_{\text{S-SSB}}(i) = min\left(P_{\text{CMAX}} - \Delta, P_{\text{O,S-SSB}} + 10\, log_{10}\left(2^{\mu} \cdot M_{\text{RB}}^{\text{S-SSB}}\right) + \alpha_{\text{S-SSB}} \cdot PL\right)$$
$$(2)$$

$$P_{\text{S-SSB}}(i) = min\left(P_{\text{CMAX}}, P_{\text{O,S-SSB}} + 10\, log_{10}\left(2^{\mu} \cdot M_{\text{RB}}^{\text{S-SSB}}\right) + \alpha_{\text{S-SSB}} \cdot PL - \Delta\right)$$
$$(2a)$$

$$P_{\text{S-SSB}}(i) = min\left(P_{\text{CMAX}}-\Delta, P_{MAX-PSD} - \Delta, P_{\text{O,S-SSB}} + 10\, log_{10}\left(2^{\mu} \cdot M_{\text{RB}}^{\text{S-SSB}}\right) + \alpha_{\text{S-SSB}} \cdot PL\right)$$
$$(2b)$$

$$P_{\text{S-SSB}}(i) = P_{\text{CMAX}} - \Delta \qquad (3)$$

$$P_{\text{S-SSB}}(i) = P_{MAX-PSD} - \Delta \qquad (3a)$$

$$P_{\text{S-SSB}}(i) = min(P_{\text{CMAX}}, P_{MAX-PSD}) - \Delta \qquad (3b)$$

$$P_{\text{S-SSB}}(i) = min(P_{\text{CMAX}} - \Delta, P_{MAX-PSD}) \qquad (3c)$$

i represents an index of the first time unit, $P_{\text{CMAX}}$ represents the maximum transmit power of the first device, $\Delta$ is the value of the first parameter, $M^{\text{S-SSB}}$ represents a bandwidth of the S-SSB, for example, $M_{\text{RB}}^{\text{S-SSB}}$ represents a quantity of RBs in the first frequency domain resource set that are occupied by the S-SSB, and in NR R16 or R17 SL, $M_{\text{RB}}^{\text{S-SSB}} = 11$. $\mu$ is a subcarrier spacing at which the first device sends the S-SSB, $P_{\text{O,S-SSB}}$ and $\alpha_{\text{S-SSB}}$ represent

transmit power parameters of the S-SSB, *PL* represents a path loss between the first device and a serving cell, min() represents taking a minimum value in a plurality of numbers, and $P_{MAX\text{-}PSD}$ represents a maximum transmit power, for example, 10 dBm or 13 dBm, on each MHz required by a regional regulation.

For example, if a parameter *dl-P0-pSBCH* is provided, a value of $P_{O,S\text{-}SSB}$ is a value provided for *dl-P0-pSBCH;* otherwise, $P_{O,S\text{-}SSB}(i) = P_{CMAX}$. If *dl-Alpha-PSSCH-PSCCH* is provided, $\alpha_{S\text{-}SSB}$ is a value provided for *dl-Alpha-PSSCH-PSCCH;* otherwise, $\alpha_{S\text{-}SSB} = 1$.

In an implementation, when the first message is a physical sidelink shared channel (physical sidelink shared channel, PSSCH), the transmit power $P_{PSSCH}(i)$ for the first message satisfies:

$$P_{\text{PSSCH}}(i) = min\left(P_{\text{CMAX}} - \Delta, P_{\text{MAX,CBR}}, min\left(P_{\text{PSSCH},D}(i), P_{\text{PSSCH},SL}(i)\right)\right) \qquad (4)$$

$$P_{\text{PSSCH}}(i) = min\left(P_{\text{CMAX}}, P_{\text{MAX,CBR}} - \Delta, min\left(P_{\text{PSSCH},D}(i), P_{\text{PSSCH},SL}(i)\right)\right) \qquad (4a)$$

$$P_{\text{PSSCH}}(i) = min\left(P_{\text{CMAX}}, P_{\text{MAX,CBR}}, min\left(P_{\text{PSSCH},D}(i), P_{\text{PSSCH},SL}(i)\right) - \Delta\right) \qquad (4b)$$

$$P_{\text{PSSCH}}(i) = min\left(P_{\text{CMAX}}, P_{\text{MAX,CBR}}, min\left(P_{\text{PSSCH},D}(i), P_{\text{PSSCH},SL}(i)\right)\right) - \Delta \qquad (4c)$$

i represents an index of the first time unit, $\Delta$ is the value of the first parameter, $P_{CMAX}$ represents the maximum transmit power of the first device, $P_{MAX,CBR}$ represents a maximum transmit power determined based on a CBR, $P_{MAX,CBR}$ is determined based on a value of a parameter *sl-MaxTxPower*, $P_{MAX,CBR}$ is a power value associated with a transmission priority of the PSSCH and/or a CBR value range of a resource pool, $P_{PSSCH,D}(i)$ represents a value of a power parameter that is of the PSSCH in the first time unit i and that is determined based on a downlink path loss between the first device and a serving cell, and $P_{PSSCH,SL}(i)$ represents a value of a power parameter that is of the PSSCH in the first time unit i and that is determined based on a sidelink path loss between the first device and the serving cell.

Optionally, if the value of *sl-MaxTxPower* is not provided, $P_{MAX,CBR} = P_{CMAX}$.

Optionally, $P_{PSSCH,D}(i)$ satisfies any one of the following:

For example, when a parameter *dl-P0-PSSCH-PSCCH* is provided,

$$P_{\text{PSSCH},D}(i) = P_{O,D} + 10\,log_{10}\left(2^{\mu} \cdot M_{\text{RB}}^{\text{PSSCH}}(i)\right) + \alpha_D \cdot PL_D;$$

otherwise,

$$P_{\text{PSSCH},D}(i) = min\left(P_{\text{CMAX}}, P_{\text{MAX,CBR}}\right);$$

or

$$P_{\text{PSSCH},D}(i) = min\left(P_{\text{CMAX}}, P_{\text{MAX,CBR}}, P_1\right);$$

or

$$P_{\text{PSSCH},D}(i) = min(P_{\text{CMAX}}, P_1);$$

or

$$P_{\text{PSSCH},D}(i) = min\left(P_{\text{MAX,CBR}}, P_1\right)$$

$P_{O,D}$ and $\alpha_D$ are power parameters of the PSSCH, $PL_D$ is the downlink path loss between the first device and the serving cell, or represents a downlink transmission loss estimated by the first device based on a reference signal, $\mu$ is a subcarrier spacing at which the first device sends the first message, or $\mu$ is a subcarrier width configuration factor, a subcarrier width is $2^{\mu} \cdot 15\,KHz$, and $M_{\text{RB}}^{\text{PSSCH}}(i)$ represents a quantity of RBs occupied by the PSSCH at a transmission moment i.

For example, a value of $P_{O,D}$ is a value of *dl-P0-PSSCH-PSCCH*. If *dl-Alpha-PSSCH-PSCCH* is provided, $\alpha_D$ is the value provided for *dl-Alpha-PSSCH-PSCCH;* otherwise, $\alpha_D$ = 1.

Optionally, $P_{\text{PSSCH},SL}(i)$ satisfies any one of the following:

For example, when a parameter *sl-P0-PSSCH-PSCCH* is provided, and a cast type (cast type) in an SCI format indicates a unicast type, or a 2-stage SCI format is SCI-2C,

$$P_{\text{PSSCH},SL}(i) = P_{O,SL} + 10\,log_{10}\left(2^\mu \cdot M_{\text{RB}}^{\text{PSSCH}}(i)\right) + \alpha_{SL} \cdot PL_{SL};$$

otherwise,

$$P_{\text{PSSCH,SL}}(i) = min\left(P_{\text{CMAX}}, P_{\text{PSSCH},D}(i)\right);$$

or

$$P_{\text{PSSCH,SL}}(i) = min\left(P_{\text{CMAX}}, P_{\text{PSSCH},D}(i), P_1\right);$$

or

$$P_{\text{PSSCH,SL}}(i) = min\left(P_{\text{PSSCH},D}(i), P_1\right);$$

or

$$P_{\text{PSSCH,SL}}(i) = min(P_{\text{CMAX}}, P_1)$$

$P_{O,SL}$ and $\alpha_{SL}$ are power parameters of the PSSCH, $PL_{SL}$ is a sidelink path loss, $\mu$ is a subcarrier spacing at which the first device sends the first message, and $M_{\text{RB}}^{\text{PSSCH}}(i)$ represents a quantity of RBs occupied by the PSSCH at a transmission moment i.

For example, a value of $P_{O,SL}$ is a value of *sl-P0-PSSCH-PSCCH*. If *sl-Alpha-PSSCH-PSCCH* is provided, $\alpha_{SL}$ is a value provided for *sl-Alpha-PSSCH-PSCCH;* otherwise, $\alpha_{SL}$ = 1.

For example, $PL_{SL}$ = *referenceSignalPower - higher layer filteredRSRP* . The reference signal power *referenceSignalPower* is a sum of powers of PSSCH transmission on REs on an antenna port of the first device, and may be obtained by a higher layer filter by using an sl-FilterCoefficient configuration. *higher layer filteredRSRP* is a reference signal received power (reference signal received power, RSRP) value obtained by the first device through the sl-FilterCoefficient filter-configuration by using a PSSCH DMRS in the PSSCH transmission.

S230: The first device sends the first message in the first time unit based on the transmit power for the first message. Correspondingly, the second device receives the first message in the first time unit.

For example, the first device transmits the first message to the second device in the synchronization slot based on the transmit power that is for the first message and that is determined in step S220, where the first message includes the synchronization signal and/or data.

Based on this implementation, a transmit power for the synchronization signal (for example, a corresponding S-SSB and/or PSSCH in the synchronization RB set) transmitted by the first device on the first frequency domain resource set is determined, to avoid fluctuation in the power for the synchronization signal, ensure stability of a transmit power during data transmission on the first frequency domain resource set, improve system transmission performance, and avoid communication interruption and unnecessary losses of transmission performance caused by frequent synchronization source switching performed by the first device during synchronization due to fluctuation in the transmit power for the synchronization signal.

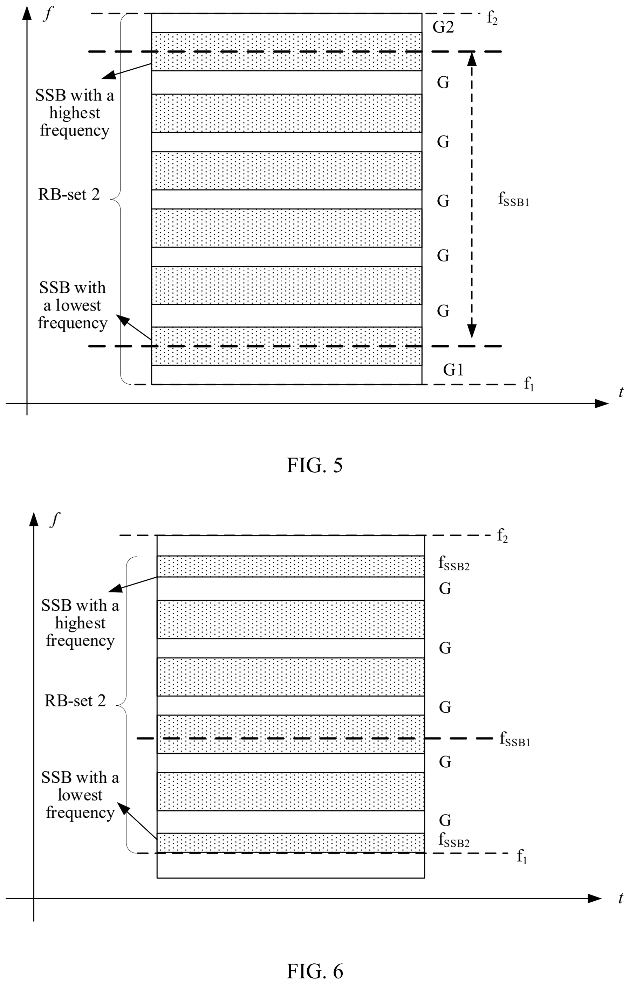

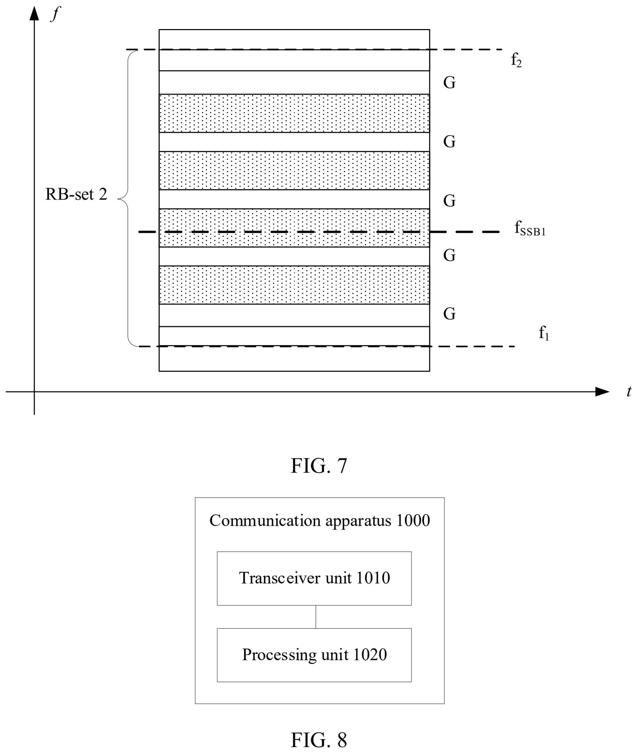

Considering that when a plurality of SSBs (including the first SSB used for synchronization and the N-1 second SSBs) are repeatedly sent in one RB set (for example, the RB set 2), how to determine a frequency position of each SSB, and how to send repeated replicas in one RB set are problems that need to be considered currently, the following provides specific descriptions by using a method 300, including: placing the first SSB and the N-1 second SSBs on a preferred position subset (as shown in FIG. 5 below), or placing the first SSB and the N-1 second SSBs on a minimally constrained position subset (as shown in FIG. 6 or FIG. 7 below).

FIG. 3 is a schematic flowchart of a communication method 300 according to an embodiment of this application.

As shown in FIG. 3, the method procedure may be performed by a first device and a second device, or may be performed by a module and/or a component (for example, a chip or an integrated circuit) that are installed in the first device and the second device and that have corresponding functions. This is not limited in this application. The following uses the first device and the second device as execution entities for description, and a plurality of following steps are included.

S310: The first device obtains a first frequency of a first SSB used for synchronization.

The first frequency is located in a first frequency domain resource set, the first frequency domain resource set includes all subcarriers that carry the first SSB, and the first frequency domain resource set is located in a BWP.

For example, a frequency of the first frequency domain resource set in the BWP is configured by using signaling or predefined, and/or the first frequency domain resource set is a frequency domain resource set including the first SSB, and a frequency of the first SSB in the BWP is configured by using signaling or predefined.

For example, the first frequency is a frequency corresponding to a center subcarrier of the first SSB. For example, when a quantity of subcarriers included in the first SSB is an even number L, the first frequency is L/2-1, L/2, or L/2+1. For another example, when a quantity of subcarriers included in the first SSB is an odd number L, the first frequency is (L-1)/2 or (L+1)/2. For example, if the quantity of subcarriers included in the first SSB is 132, the first frequency is a frequency corresponding to a $66^{th}$ or a $67^{th}$ subcarrier of the first SSB.

For example, the first frequency is configured or preconfigured by a network device. Optionally, the first frequency may be configured on a carrier, the BWP, or a resource pool. Optionally, the first frequency may be indicated by using an absolute radio-frequency channel number (absolute radio-frequency channel number, ARFCN).

In this embodiment of this application, the first device is a synchronization source. Optionally, the synchronization source is a device that sends a synchronization signal to provide time and/or frequency synchronization references for a receiver machine of the synchronization signal. Optionally, the first device may be used as an example of the device that sends the synchronization signal.

For example, all the subcarriers included in the first SSB are located in the first frequency domain resource set.

In other words, the first frequency domain resource set includes all resource elements REs carrying the first SSB; and/or the first frequency is not located in a guard band between two adjacent frequency domain resource sets in the BWP (for example, G shown in FIG. 5); and/or a resource element RE of the first SSB is not located in a guard band between two adjacent frequency domain resource sets in the BWP.

The following describes, by using examples, manners of obtaining and determining the first frequency of the first SSB.

In an implementation, that the first device obtains the first frequency of the first SSB used for synchronization includes: The first device obtains a second frequency range, and determines, based on the first frequency and the second frequency range, frequencies that are of start and end subcarriers of the first SSB in the first frequency domain resource set and that are in the first frequency domain resource set.

For example, the second frequency range is start and end frequencies in the first frequency domain resource set.

Optionally, the second frequency range is configured or preconfigured by the network device, or is predefined. For example, the second frequency range is indicated by using an ARFCN. Optionally, the second frequency range may be configured on a carrier, the BWP, or a resource pool. Optionally, the second frequency range may be indicated by using an ARFCN.

In an implementation, that the first device obtains the first frequency of the first SSB used for synchronization includes: The first device determines the first frequency based on at least one of a subcarrier spacing, a first gap $G_1$, a second gap G, a third gap $G_2$, or a quantity N of SSBs included in the first frequency domain resource set, where N is an integer greater than or equal to 2.

For example, N is configured or preconfigured by using signaling, or is predefined. Optionally, N may be configured on a carrier, the BWP, or a resource pool.

For example, the subcarrier spacing is a subcarrier spacing at which the first SSB is sent, the first gap is a frequency gap between a start frequency of the first frequency domain resource set and a start frequency of an SSB with a lowest frequency in the first frequency domain resource set, the second gap is a frequency gap between two adjacent SSBs in the first frequency domain resource set, and the third gap is a frequency gap between an end frequency of the first frequency domain resource set and an end frequency of an SSB with a highest frequency in the first frequency domain resource set.

Optionally, $G_1$, G, $G_2$, and N are configured by using signaling or predefined, and units of $G_1$, G, and $G_2$ are RE, PRB, or 15 kHz.

For example, when the units of $G_1$, G, and $G_2$ are PRB, $G_1$, G, and $G_2$ satisfy:

$$G_1 + N \cdot M_{SSB} + (N - 1) \cdot G + G_2 \leq N_{RBset1} \qquad (5)$$

For example, when the units of $G_1$, G, and $G_2$ are RE, $G_1$, G, and $G_2$ satisfy:

$$G_1/N_{SC}^{RB} + N \cdot M_{SSB} + (N-1) \cdot G/N_{SC}^{RB} + G_2/N_{SC}^{RB} \leq N_{RBset1} \qquad (6)$$

For example, when the units of $G_1$, $G$, and $G_2$ are 15 kHz, $G_1$, $G$, and $G_2$ satisfy:

$$G_1/(2^\mu N_{SC}^{RB}) + N \cdot M_{SSB} + (N-1) \cdot G/(2^\mu N_{SC}^{RB}) + G_2/(2^\mu N_{SC}^{RB}) \leq N_{RBset1} \qquad (7)$$

$G_1$ represents a bandwidth occupied by the first gap, the first gap is the frequency gap between the start frequency of the first frequency domain resource set and the start frequency of the SSB with the lowest frequency in the first frequency domain resource set, G represents a bandwidth occupied by the second gap, the second gap is a frequency gap between two adjacent SSBs in the first frequency domain resource set, $G_2$ represents a bandwidth occupied by the third gap, the third gap is the frequency gap between the end frequency of the first frequency domain resource set and the end frequency of the SSB with the highest frequency in the first frequency domain resource set, $M_{SSB}$ represents a bandwidth of the first SSB, $N_{RBset1}$ represents a bandwidth occupied by the first frequency domain resource set, $N_{SC}^{RB}$ represents a quantity of subcarriers included in one resource block RB, $\mu$ represents the subcarrier spacing at which the first SSB is sent, N is the quantity of SSBs included in the first frequency domain resource set, and N is an integer greater than or equal to 2.

Optionally, in this application, a value of N may alternatively be determined based on a position of the first frequency in the first frequency domain resource set, a bandwidth of an SSB, a bandwidth of the first frequency domain resource set, and a frequency gap between two adjacent SSBs in the first frequency domain resource set. For example, the value of N is a determined maximum value that satisfies any one or more of (5), (6), and (7) when a complete SSB is included. Alternatively, for example, the value of N is a maximum value that satisfies any one of (5), (6), and (7) when a complete SSB and at least one incomplete SSB are included.

For example, for different SCSs, a quantity N of repeatedly sent S-SSBs and a GAP on a carrier are shown in Table 3. In the following table, a quantity of PRBs or RBs included in one RB set on a corresponding subcarrier is shown. In other words, a bandwidth of the RB set represented by RB or PRB is shown. N is a quantity of SSBs that may be included in the RB set. $G_1$, $G$, and $G_2$ are the parameters defined above, and in Table 3, the units of $G_1$, $G$, and $G_2$ are RB or PRB. Optionally, for a corresponding SCS, values of N, $G_1$, $G$, and $G_2$ may be any one or more in the following Table 3.

Table 3

| SCS (kHz) | $N_{RBset1}$ | N (SSB) | G (PRB) | $G_1$ (PRB) | $G_2$ (PRB) |
|---|---|---|---|---|---|
| 15 | 106 | 9 | 0 | 3 | 4 |
| 15 | 106 | 8 | 1 | 5 | 6 |
| 15 | 106 | 8 | 2 | 2 | 2 |
| 15 | 106 | 7 | 3 | 5 | 6 |
| 15 | 106 | 7 | 4 | 0 | 1 |
| 15 | 106 | 6 | 5 | 7 | 8 |
| 15 | 106 | 6 | 6 | 5 | 5 |
| 15 | 106 | 6 | 7 | 2 | 3 |
| 15 | 106 | 5 | 9 | 7 | 8 |
| 15 | 106 | 5 | 10 | 5 | 6 |
| 15 | 106 | 5 | 11 | 3 | 4 |
| 15 | 106 | 5 | 12 | 1 | 2 |
| 30 | 51 | 4 | 1 | 2 | 2 |
| 30 | 51 | 4 | 2 | 0 | 1 |
| 30 | 51 | 3 | 4 | 5 | 5 |
| 30 | 51 | 3 | 5 | 4 | 4 |
| 30 | 51 | 3 | 6 | 3 | 3 |
| 30 | 51 | 2 | 20 | 4 | 5 |

(continued)

| SCS (kHz) | $N_{RBset1}$ | N (SSB) | G (PRB) | $G_1$ (PRB) | $G_2$ (PRB) |
|-----------|--------------|---------|---------|-------------|-------------|
| 60 | 24 | 2 | 2 | 0 | 0 |
| 60 | 24 | 2 | 1 | 0 | 1 |
| 60 | 24 | 2 | 0 | 1 | 1 |

Based on this implementation, preferred values of G, $G_1$, and $G_2$ for each SCS are defined, so that S-SSBs are mapped as evenly as possible when an OCB requirement is met, to reduce MPR. It should be understood that the OCB requirement means that to-be-sent information occupies at least 80% of one channel bandwidth. Optionally, a channel bandwidth is 20 MHz. Optionally, one channel is one RB set. Optionally, one RB set occupies a bandwidth of one channel.

In an implementation, the first frequency is any one of a plurality of SSB candidate frequencies in the first frequency domain resource set, and the plurality of SSB candidate frequencies are determined based on a bandwidth of the first SSB and a frequency gap between two adjacent SSBs.

In other words, a frequency gap between two adjacent SSB candidate frequencies is a sum of the bandwidth of the first SSB and a frequency gap between two adjacent SSBs.

In an implementation, to map as many complete S-SSBs to a bandwidth included in the RB set, the first frequency $f_{SSB1}$ satisfies:

$$f_{SSB1} = f_1 + G_1 + M_{SSB}/2 + n \cdot (G + M_{SSB}) \qquad (8)$$

$f_1$ represents the start frequency of the first frequency domain resource set, $M_{SSB}$ represents the bandwidth of the first SSB, $G_1$ represents the bandwidth occupied by the first gap, the first gap is the frequency gap between the start frequency of the first frequency domain resource set and the start frequency of the SSB with the lowest frequency in the first frequency domain resource set, G represents the bandwidth occupied by the second gap, the second gap is a frequency gap between two adjacent SSBs in the first frequency domain resource set, a value of $n$ is any integer from 0 to N-1, N is the quantity of SSBs included in the first frequency domain resource set, and N is an integer greater than or equal to 2. For example, the value of N may be a maximum value that satisfies the foregoing formula (8) when a complete SSB is included. For example, the value of N may be a maximum value that is of N and that satisfies the foregoing formula (8) when a complete SSB and at least one incomplete SSB are included.

Optionally, in any one or more of the foregoing formulas (5), (6), (7), and (8), a value of $G_1$ may be zero.

Optionally, in any one or more of the foregoing formulas (5), (6), (7), and (8), $G_1$ may be removed from a corresponding formula. Optionally, in this case, the start frequency of the first frequency domain resource set is aligned with the start frequency of the SSB with the lowest frequency in the first frequency domain resource set.

Optionally, the parameter $f_1$ in the foregoing formula may be a frequency starting from an ARFCN of a $j^{th}$ RB set, or may be calculated or determined by using another parameter, for example,

(1) may alternatively be a start frequency of the $j^{th}$ RB set indicated by the network device by using signaling;
(2) is determined based on a frequency of a point A and an offset value of a start frequency of the $j^{th}$ RB set relative to the frequency of the point A; or
(3) may be determined based on a frequency of a first S-SSB included in an SL-BWP or the resource pool, a frequency of a $1^{st}$ RB set in the SL-BWP, and a gap between RB sets, for example, a frequency position of an RB set 2 in FIG. 4 may be determined by using the foregoing method. Therefore, the RB set j may be determined based on a quantity of RB sets included in the SL-BWP or the resource pool, a gap GS0 between RB sets, and a frequency gap GS1 between a start frequency of the RB set and a start frequency of the SL-BWP and a frequency gap GS2 between an end frequency of the RB set and an end frequency of the SL-BWP.

To ensure that all the subcarriers included in the first SSB are located in the first frequency domain resource set (for example, the RB set 2), the first frequency $f_{SSB1}$ needs to be further limited. As shown in FIG. 5, the first frequency $f_{SSB1}$ should preferably be located at a position of a center frequency of the RB set 2. Optionally, it only needs to be ensured that the first frequency $f_{SSB1}$ is located between a center frequency of an SSB with a highest frequency in the RB set 2 and a center frequency of an SSB with a lowest frequency in the RB set 2.

In an implementation, the first frequency $f_{SSB1}$ satisfies:

$$f_1 + G_1 + M_{SSB}/2 \leq f_{SSB1} \leq f_1 + N_{RBset1} - 1 - M_{SSB}/2 \qquad (9)$$

Optionally, the foregoing formula (9) may further have a plurality of following variations:

$$f_1 + G_1 + M_{SSB}/2 \leq f_{SSB1} \leq f_1 + G_1 + M_{SSB}/2 + (N-1) \cdot (G + M_{SSB}) \qquad (9a)$$

$$f_1 + M_{SSB}/2 \leq f_{SSB1} \leq f_1 + N_{RBset1} - 1 - M_{SSB}/2 \qquad (9b)$$

$$f_1 + M_{SSB}/2 \leq f_{SSB1} \leq f_1 + M_{SSB}/2 + (N-1) \cdot (G + M_{SSB}) \qquad (9c)$$

$f_1$ represents the start frequency of the first frequency domain resource set, $M_{SSB}$ represents the bandwidth of the first SSB, G represents the bandwidth occupied by the second gap, the second gap is a frequency gap between two adjacent SSBs in the first frequency domain resource set, $G_1$ represents the bandwidth occupied by the first gap, the first gap is the frequency gap between the start frequency of the first frequency domain resource set and the start frequency of the SSB with the lowest frequency in the first frequency domain resource set, and $N_{RBset1}$ represents the bandwidth occupied by the first frequency domain resource set.

For example, the value of N is a maximum value that satisfies any one or more of (5), (6), and (7) when a complete SSB is included. Alternatively, for example, the value of N is a maximum value that satisfies any one or more of (9), (9a), (9b), and (9c) when a complete SSB is included. For example, the value of N is a maximum value that satisfies any one or more of (9), (9a), (9b), and (9c) when a complete SSB and at least one incomplete SSB are included.

The following describes, by using examples, a manner of determining frequencies, namely, third frequencies of N-1 second SSBs in the first frequency domain resource set.

In an implementation, the first device determines N-1 third frequencies based on the first frequency, where the N-1 third frequencies are the frequencies of the N-1 second SSBs, the first SSB and the N-1 second SSBs are included in the first frequency domain resource set, and N is an integer greater than or equal to 2.

For example, the N-1 second SSBs are used for meeting a channel occupancy requirement OCB, and/or at least one of the N-1 second SSBs is used by the second device to perform synchronization.

In an implementation, the third frequency $f_{SSB2}$ satisfies:

$$f_{SSB2} = f_{SSB1} + k \cdot (G + M_{S-SSB}) \qquad (10)$$

$f_{SSB1}$ represents the first frequency. For details, refer to related descriptions of the foregoing formula (8). *k* is an integer.

In an implementation, the third frequency is any one or more of a plurality of SSB candidate frequencies in the first frequency domain resource set, and the plurality of SSB candidate frequencies are determined based on a bandwidth of the first SSB and a frequency gap between two adjacent SSBs.

For example, the third frequency is a frequency corresponding to a center subcarrier of the second SSB. For example, when a quantity of subcarriers included in the second SSB is an even number L, the third frequency is L/2-1, L/2, or L/2+1. For another example, when a quantity of subcarriers included in the second SSB is an odd number L, the third frequency is (L-1)/2 or (L+1)/2. For example, if the quantity of subcarriers included in the second SSB is 132, the third frequency is a frequency corresponding to a 66th or a 67th subcarrier in the second SSB.

In other words, a frequency gap between two adjacent SSB candidate frequencies is a sum of the bandwidth of the second SSB and a frequency gap between two adjacent SSBs.

FIG. 5 is a diagram of mapping a plurality of SSBs on one RB set according to an embodiment of this application. It is assumed that a unit of a time domain resource is slot. Using the synchronization RB set 2 shown in FIG. 4 as an example, as shown in FIG. 5, a synchronization slot on the synchronization RB set 2 includes N=6 SSBs, for example, includes one first S-SSB used for synchronization and five second S-SSBs used for channel occupancy. A start frequency of the RB set 2 is $f_1$, a frequency gap between two adjacent SSBs is G, a frequency gap between the start frequency $f_1$ of the RB set 2 and a start frequency of an SSB with a lowest frequency in the RB set 2 is $G_1$, and a frequency gap between an end frequency $f_2$ of the RB set 2 and an end frequency of an SSB with a highest frequency in the RB set 2 is $G_2$. Based on the foregoing formula (8), when n is equal to 0, the first frequency $f_{SSB1}$ corresponding to the first SSB is a center frequency corresponding to the SSB with the lowest frequency in the RB set 2. When n is equal to 1 (or 0), the first frequency $f_{SSB1}$ is a center frequency corresponding to an SSB with a second lowest frequency in the RB set 2. By analogy, when n is equal to 5 (or 4), the first frequency $f_{SSB1}$ is a center frequency corresponding to the SSB with the highest frequency in the RB set 2. It should be understood that the other five SSBs in the RB set 2 except the first SSB are the second SSBs.

It should be noted that FIG. 5 is merely an example. A quantity of SSBs included in the RB set 2 is not limited in this application, and a relationship between frequency domain positions of the N-1 second SSBs is not limited.

S320: The second device obtains the first frequency of the first SSB used for synchronization. For a specific implementation, refer to related descriptions of step S310. Optionally, the second device may further determine the third frequencies of the N-1 second SSBs by referring to related descriptions of step S310. For brevity, details are not described herein again.

The following describes, based on the foregoing step S310 by using examples, an implementation of mapping the first SSB and the N-1 second SSBs on a first frequency domain resource set.

For example, when a signal or a channel related to an S-SSB is mapped on the first frequency domain resource set (for example, the RB set 2), for a signal used for synchronization, the S-SSB needs to be completely mapped, and for another signal used for meeting an OCB requirement, a bandwidth of the RB set does not need to be filled by all signals of the complete S-SSB, as long as the bandwidth of the RB set is filled.

For example, when an RB on an edge of the RB set or a part of the RB may also be used, a signal of the S-SSB may be further used for filling. Optionally, during the foregoing filling, rate matching needs to be performed on a PSBCH on a corresponding symbol and a PRB or an RE on which mapping is performed.

In an implementation, the first device may map the first SSB on the first frequency domain resource set at the first frequency, and map the N-1 second SSBs on the first frequency domain resource set one by one at a second gap G based on the first frequency, where the second gap is a frequency gap between two adjacent SSBs in the N SSBs.

In an implementation, the first device may map the first SSB on the first frequency domain resource set at the first frequency, and map the N-1 second SSBs on the first frequency domain resource set at the third frequencies. It should be understood that there are N-1 third frequencies, the N-1 third frequencies are different from each other, and the N-1 third resources are in one-to-one correspondence with the N-1 second SSBs.

In an implementation, a start frequency of a third SSB is the start frequency of the first frequency domain resource set, the third SSB belongs to the N-1 second SSBs, a bandwidth occupied by the third SSB is less than the bandwidth occupied by the first SSB, and a lowest subcarrier on the third SSB includes a signal of one complete subcarrier; and/or an end frequency of a fourth SSB is the end frequency of the first frequency domain resource set, the fourth SSB belongs to the N-1 second SSBs, a bandwidth occupied by the fourth SSB is less than the bandwidth occupied by the first SSB, and a highest subcarrier on the fourth SSB includes a signal of one complete subcarrier.

Optionally, in an implementation, a start frequency of a third SSB is the start frequency of the first frequency domain resource set, the third SSB belongs to the N-1 second SSBs, a bandwidth occupied by the third SSB is less than the bandwidth occupied by the first SSB, and a lowest subcarrier on the third SSB does not include a signal of an incomplete subcarrier; and/or a start frequency of a fourth SSB is the end frequency of the first frequency domain resource set, the fourth SSB belongs to the N-1 second SSBs, a bandwidth occupied by the fourth SSB is less than the bandwidth occupied by the first SSB, and a highest subcarrier on the fourth SSB does not include a signal of an incomplete subcarrier.

For example, because a frequency position of the first S-SSB used for synchronization is a multiple of 15 kHz, 1/2 (when an SCS of the first S-SSB is 30 kHz) or 1/4 (when an SCS of the first S-SSB is 60 kHz) S-SSB RE may need to be transmitted at an edge of the first frequency domain resource set (for example, a synchronization RB-set 2). In this case, no transmission is performed on a corresponding incomplete RE on the second S-SSB. Alternatively, in this case, the second S-SSB does not include a corresponding incomplete RE.

In an implementation, a start frequency of a third SSB is the start frequency of the first frequency domain resource set, the third SSB belongs to the N-1 second SSBs, and a bandwidth occupied by the third SSB is less than the bandwidth occupied by the first SSB; and/or a start frequency of a fourth SSB is the end frequency of the first frequency domain resource set, the fourth SSB belongs to the N-1 second SSBs, and a bandwidth occupied by the fourth SSB is less than the bandwidth occupied by the first SSB.

Optionally, when a channel occupancy requirement OCB is met, the start frequency of the third SSB is the start frequency of the first frequency domain resource set; and/or the start frequency of the fourth SSB is the end frequency of the first frequency domain resource set.

FIG. 6 is a diagram of mapping a plurality of SSBs on one RB set according to an embodiment of this application. It is assumed that a unit of a time domain resource is slot. Using the synchronization RB set 2 shown in FIG. 5 as an example, as shown in FIG. 6, a synchronization slot on the synchronization RB set 2 includes N=6 SSBs, for example, includes one first S-SSB used for synchronization and five second S-SSBs used for channel occupancy. A start frequency of the RB set 2 is $f_1$, and a frequency gap between two adjacent SSBs is G. Based on the foregoing formula (9), in frequency domain of the RB-set 2, there may be some SSBs with the lowest frequency and the highest frequency. To ensure that all subcarriers of the first SSB can be included in the RB-set 2 for sending, the SSBs with the lowest frequency and the highest frequency in the RB set 2 may be the second SSBs. For example, if a 3rd SSB in ascending order of frequencies of six SSBs in the RB set 2 is the first SSB, five SSBs other than the first SSB in the RB set 2 are the second SSBs. Considering that a lowest frequency and a highest frequency of the RB set 2 are insufficient for mapping a complete SSB, when an OCB requirement is met, a part of the SSB may be mapped to an entire transmission bandwidth of the RB set 2. In other words, the second SSBs with the lowest frequency and the highest frequency in the RB set 2 may be mapped and sent.

In an implementation, a start frequency of a third SSB is not the start frequency of the first frequency domain resource set, the third SSB belongs to the N-1 second SSBs, and a bandwidth occupied by the third SSB is less than the bandwidth occupied by the first SSB; and/or a start frequency of a fourth SSB is the end frequency of the first frequency domain resource set, the fourth SSB belongs to the N-1 second SSBs, and a bandwidth occupied by the fourth SSB is less than the bandwidth occupied by the first SSB.

Optionally, when a channel occupancy requirement is met, the start frequency of the third SSB is not the start frequency of the first frequency domain resource set; and/or the start frequency of the fourth SSB is the end frequency of the first frequency domain resource set.

FIG. 7 is a diagram of mapping a plurality of SSBs on one RB set according to an embodiment of this application. It is assumed that a unit of a time domain resource is slot. It is assumed that a bandwidth of the RB set 2 is 20 MHz, and the RB set 2 includes four subchannels. As shown in FIG. 7, a synchronization slot on the synchronization RB set 2 includes N=4 SSBs, for example, includes one first S-SSB used for synchronization and three second S-SSBs used for channel occupancy. A start frequency of the RB set 2 is $f_1$, and a frequency gap between two adjacent SSBs is G. In comparison with the synchronization RB set 2 shown in FIG. 6, considering that a lowest frequency and a highest frequency of the RB set 2 are insufficient for mapping a complete SSB, when an OCB requirement is met, the second SSBs may not be mapped at the lowest frequency and the highest frequency in the RB set 2.

To avoid a problem of high peak to average power ratio PAPR in an RB set in a synchronization slot, the first device may scramble an SSB signal used for synchronization and an SSB replica signal used for channel occupancy that are in a plurality of RB sets in a BWP. The following describes a scrambling manner by using an example in which there are four RB sets and each RB set includes nine SSB signals.

In an implementation, the first device may separately scramble 4*9=36 signals in the synchronization slot in the BWP by using a sequence c, to reduce a peak to average power ratio of the 36 signals in the synchronization slot.

In an implementation, the first device may first separately scramble the SSB signals in the four RB sets by using a sequence c1, and then scramble replicas of the nine SSBs in each RB set by using a sequence c2, to reduce a peak to average power ratio of the 36 signals in the synchronization slot.

For example, the first device may first scramble the replicas of the nine SSBs in each RB set by using the sequence c2, and then scramble the SSB signals in the four RB sets by using the sequence c1, to reduce the peak to average power ratio of the 36 signals in the synchronization slot.

Optionally, using a sidelink synchronization signal as an example, an S-PSS, an S-SSS, and/or a PSBCH in an S-SSB are separately scrambled by using two sequences, and the following condition is satisfied:

$$ac(i, j)=(a(0, j)+c1(i, j)+c2(i, j)) \bmod 2, \text{ where } 0{\leq}j{<}L{-}1, \text{ and } i{=}0, 1, N{-}1 \qquad (11)$$

ac(i, j) is a scrambled signal, $L$ is a length of a to-be-scrambled signal a, a(0, j) is the S-PSS, the S-SSS, or the PSBCH in the sidelink synchronization signal block, c1(i, j) and c2(i, j) are random sequences, and initial values of c1(i, j) and c2(i, j) are determined based on an identifier of a sidelink synchronization signal sequence and/or an index of a frequency domain resource set, mod represents a modulo operation, N is a positive integer, i is an index of a resource block set RB set, and j is an index of each S-SSB signal in the resource block set.

Based on the foregoing implementation, a problem of high peak to average power ratio PAPR between a plurality of non-synchronization RB sets included in the BWP and a plurality of second SSBs in each RB set can be avoided through scrambling, to ensure signal transmission quality and improve system transmission performance.

S330: The first device sends the first SSB to the second device. Correspondingly, the second device receives the first SSB from the first device.

Optionally, the second device further receives one or more of the N-1 second SSBs from the first device.

It should be understood that the second device may perform synchronization based on the received first SSB and the received second SSB for subsequently receiving data sent by the first device, to ensure transmission performance.

According to the solution provided in this application, a relative relationship between frequency positions of a plurality of synchronization signals in a frequency domain resource set (for example, a synchronization RB set) is constrained, and a frequency domain mapping manner of each S-SSB in the synchronization RB set is determined, to clarify behavior of a transceiver device, so as to maximize system transmission performance.

It should be noted that, in the method in FIG. 3, determining of the frequency position of the SSB in the synchronization RB set is mainly described. Optionally, in the technical solution of this application, a frequency position of an SSB in a non-synchronization RB set may also be determined. A frequency position of an SSB in one or more other non-synchronization resource sets (namely, second resource sets) is determined based on a frequency of an SSB in a synchronization resource set (namely, a first resource set), and an SSB signal is provided for an SLU to ensure network-wide synchronization; and the SSB is provided for each resource set, so that each resource set has a synchronization opportunity, to improve transmission synchronization between devices and transmission performance.

For example, for broadband transmission performed on a plurality of RB sets, for different SCSs and different bandwidths, there is, between different RB sets, a corresponding guard band and a bandwidth that can be used for transmission. For details, refer to the following Table 4.

Table 4

| SCS (kHz) | 40 MHz | 60 MHz | 80 MHz |
|---|---|---|---|
| 15 | 105-6-105 (216) | N/A | N/A |
| 30 | 50-6-50 (106) | 50-6-50-6-50 (162) | 50-6-50-5-50-6-50 (217) |
| 60 | 23-5-23 (51) | 23-5-23-5-23 (79) | 23-5-23-5-23-5-23 (107) |

It should be noted that, in a scenario in which a quantity of RB sets is greater than 1, the guard band is represented as: $TBW_0\text{-}GB_0\text{-}...\text{-}GB_{N\_RBset\text{-}2}\text{-}TBW_{N\_RBset\text{-}1}$, where $TBW_r$ and $GB_r$ represent a maximum transmit bandwidth and a maximum guard band on an RB-set r (or an RB set r). For each SCS and a corresponding bandwidth, a total transmission bandwidth is written in () of Table 4. A unit in the foregoing table is PRB.

For example, when SCS=30 kHz, for 40 MHz, two RB sets are included, and a total bandwidth of the two RB sets includes 106 PRBs. Each of an RB-set 0 and an RB-set 1 includes 50 PRBs, and a size of a guard band GB between the two RB-sets is 6 PRBs. For another example, when SCS=60 kHz, for an 80 MHz bandwidth, four RB sets are included, and a total bandwidth of the four RB sets includes 107 PRBs. Each of an RB-set 0 to an RB-set 3 includes 23 PRBs, and a size of a guard band GB between every two RB-sets is 5 PRBs.

For example, a BWP or a carrier on a synchronization time domain unit includes M frequency domain resource sets, the M frequency domain resource sets include the first frequency domain resource set and M-1 second frequency domain resource sets, the synchronization time domain unit includes a time domain unit of the first SSB, the second frequency domain resource set includes q fifth SSBs, and M and q are positive integers greater than or equal to 2. For example, if M=2, the BWP or the carrier may include one first frequency domain resource and one second frequency domain resource. For another example, if M=3, the BWP or the carrier may include one first frequency domain resource and two second frequency domain resources. This is not limited in this application.

Optionally, frequency positions of the q fifth SSBs in the second frequency domain resource set are in one-to-one correspondence with and are the same as frequency positions of the N SSBs in the first frequency domain resource set, where q=N. For example, assuming that M=2, N=2, and q=2, the first frequency domain resource set may include an SSB #1 and an SSB #2, and the second frequency domain resource set includes an SSB #3 and an SSB #4. A frequency position of the SSB #1 corresponds to a frequency position of the SSB #3, and the SSB #2 corresponds to the SSB #4. In an example in which SCS=30 kHz in Table 4, for a 40 MHz carrier or BWP, a frequency range of the first frequency domain resource set (an RB set 0) is 1 to 50 PRBs, a frequency range of the second frequency domain resource set (an RB set 1) is 57 to 106 PRBs, and a frequency gap between the first frequency domain resource set and the second frequency domain resource set is 6 PRBs. It is assumed that a start position of a frequency of the SSB #1 is at a $5^{th}$ PRB, and a start position of a frequency of the SSB #2 is at a $35^{th}$ PRB. In this case, a start position of a frequency of the SSB #3 is at a 61 (equal to 5+56)$^{st}$ PRB, and a start position of a frequency of the SSB #4 is at a 91 (equal to 35+56)$^{st}$ PRB.

Optionally, the frequency positions of the q fifth SSBs in the second frequency domain resource set are predefined or configured by using signaling.

Optionally, a bandwidth position that is of an $r^{th}$ SSB in a $j^{th}$ frequency domain resource set in the M frequency domain resource sets and that is in the BWP or on the carrier is determined based on one or more of the following parameters:

a subcarrier spacing SCS, for example, a value of the SCS may be 15 kHz, 30 kHz, or 60 kHz;
a first bandwidth, where the first bandwidth is the bandwidth of the first frequency domain resource set, or the first bandwidth is a bandwidth of the second frequency domain resource set;
the second gap, where the second gap is a frequency gap between two adjacent SSBs in the first frequency domain resource set;
a fourth gap, where the fourth gap is a frequency gap between the first frequency domain resource set and the second frequency domain resource set, or a frequency gap between two adjacent second frequency domain resource sets;
an index of the first frequency domain resource set in the M frequency domain resource sets; or
an index of the second frequency domain resource set in the M frequency domain resource sets, where
$j$ is an integer greater than or equal to 1 and less than or equal to M, and $r$ is a positive integer less than or equal to q.

For example, if M=4, indexes of the four RB sets may be respectively RB set 0, RB set 1, RB set 2, and RB set 3. An index of the first frequency domain resource set in the M frequency domain resource sets may be RB set 0, and indexes of other second frequency domain resource sets in the M frequency domain resource sets are respectively RB set 1, RB set 2, and RB set 3.

In an example, a frequency position $f_{r,j}$ that is of the $r^{th}$ SSB in the $j^{th}$ frequency domain resource set in the M frequency domain resource sets and that is in the BWP or on the carrier satisfies the following conditions:

$$f_{r,j} = f_{S-SSB_r} + (j - i) \cdot (N_{RBset} + N_{GB})$$

$f_{SSBr}$ represents a frequency of an $r^{th}$ SSB in the first frequency domain resource set, $i$ represents the index of the first frequency domain resource set in the M frequency domain resource sets, $j$ represents the index of the second frequency domain resource set in the M frequency domain resource sets, $r$ represents an index of an $r^{th}$ SSB in the $N$ SSBs in the first frequency domain resource set, or $r$ represents an index of an $r^{th}$ SSB in the q fifth SSBs in the second frequency domain resource set, $N_{RBset}$ is the first bandwidth, $N_{GB}$ is the fourth gap, and r is a positive integer less than or equal to q. Optionally, in this manner, a bandwidth position that is of an SSB in each RB set in the M frequency domain resource sets and that is in the BWP or on the carrier may be calculated in a unified manner.

For example, as shown in FIG. 4, it is assumed that a UE is a sending UE of a synchronization S-SSB. As shown in Table 4, when SCS=30 kHz, for an 80 MHz BWP or carrier, four RB sets are included, that is, Q=4, including one synchronization RB set (namely, the first frequency domain resource set, for example, an RB set 2) and three non-synchronization RB sets (namely, the second frequency domain resource sets, for example, an RB set 1, an RB set 3, and an RB set 4). A frequency range of the first frequency domain resource set (an RB set 0) is 1 to 50 PRBs, a frequency range of the second frequency domain resource set (an RB set 1) is 57 to 106 PRBs, and a frequency gap between the first frequency domain resource set and the second frequency domain resource set is 6 PRBs. For example, a frequency range of the RB set 1 is 1 to 50 PRBs, a frequency range of the RB set 2 is 57 to 106 PRBs, a frequency range of the RB set 3 is 112 to 161 PRBs, and a frequency range of the RB set 4 is 168 to 217. A frequency gap between the RB set 1 and the RB set 2 is 6 PRBs, a frequency gap between the RB set 2 and the RB set 3 is 5 PRBs, and a frequency gap between the RB set 3 and an RB set 4 is 6 PRBs. It is assumed that an index of a frequency domain position of the synchronization RB set in the four RB sets is RB set 2, and indexes of frequency domain positions of the non-synchronization RB sets in the four RB sets are RB set 1, RB set 3, and RB set 4.

For the SCS of 30 kHz, a bandwidth of an S-SSB is 11 PRBs. Assuming that N=4, a slot in which an S-SSB in the synchronization RB set 2 is located includes one S-SSB used for synchronization (namely, the first S-SSB) and three S-SSB replicas used for channel occupancy (namely, three second S-SSBs, which are sequentially an S-SSB 1, an S-SSB 2, and an S-SSB 3 in ascending order of frequency positions). Optionally, each non-synchronization RB set in other non-synchronization RB sets includes four S-SSBs (namely, the q fifth SSBs, where q=4). Using the RB set 1 as an example, frequency positions of four SSBs in the RB set 1 are in one-to-one correspondence with frequency positions of four SSBs in the synchronization RB set 2. For example, if a frequency of a second S-SSB 1 in the RB set 2 is $f_{S-SSB2}$, a frequency of a $2^{nd}$ fifth SSB (in ascending order of frequency positions) corresponding to a second S-SSB 1 in the RB set 1 is $f_{2,1}$, where r=2, j=1, and i=2. In other words, the frequency of the $2^{nd}$ fifth SSB in the RB set 1 satisfies: $f_{2,1} = f_{S-SSB2} - (N_{RBset} + N_{GB})$. If $N_{RBset}$=50 PRBs, $N_{CB}$=6 PRBs, and a start position of the frequency $f_{S-SSB2}$ of the second S-SSB 1 is at a $66^{th}$ PRB, a start position of the frequency $f_{2,1}$ of the $2^{nd}$ fifth SSB in the RB set 1 is at a $10^{th}$ PRB. A manner of determining a frequency of any S-SSB in another non-synchronization RB set is similar. For brevity, details are not described herein.

Optionally, the first device sends the SSB on the M frequency domain resource sets of the synchronization time domain unit. Correspondingly, the second device receives the SSB on the M frequency domain resource sets of the synchronization time domain unit.

Optionally, before the SSB is sent on the M frequency domain resource sets of the synchronization time domain unit, the second device sends indication information to the first device. Correspondingly, the first device receives the indication information from the second device, where the indication information indicates to send the SSB on the M frequency domain resource sets of the synchronization time domain unit. Therefore, after receiving the indication information, the first device sends the SSB on the M frequency domain resource sets of the synchronization time domain unit. To be specific, when determining a frequency position of each SSB in another non-synchronization RB set, the first device determines, based on the indication information, whether to send an SSB on another RB set and provide an SSB for each resource set, so that each resource set has a synchronization opportunity, to improve transmission synchronization between devices and transmission performance.

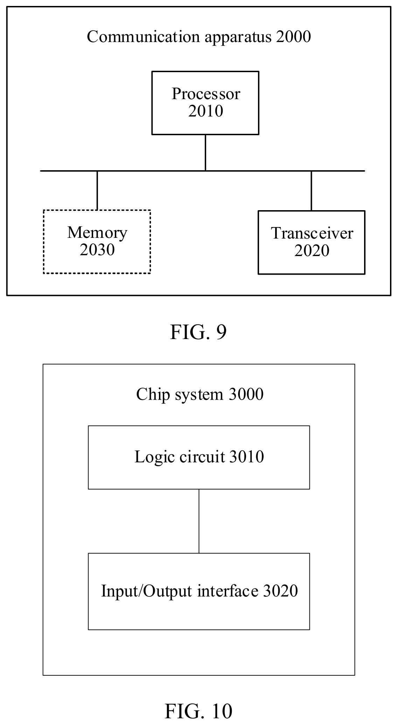

The foregoing describes in detail embodiments on a communication method side of this application with reference to FIG. 1 to FIG. 7. The following describes in detail embodiments on a communication apparatus side of this application with reference to FIG. 8 and FIG. 9. It should be understood that descriptions of the apparatus embodiments correspond to the descriptions of the method embodiments, and therefore for a part that is not described in detail, refer to the foregoing method embodiments.

FIG. 8 is a block diagram of a communication apparatus 1000 according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement steps or procedures performed by the first device in the foregoing method embodiment. The processing unit 1020 is configured to perform a processing-related operation of the first device in the foregoing method embodiment, and the transceiver unit 1010 is configured to perform a receiving/sending-related operation of the first device in the foregoing method embodiment.

In another possible design, the apparatus 1000 may implement steps or procedures performed by the second device in the foregoing method embodiment. The processing unit 1020 is configured to perform a processing-related operation of the second device in the foregoing method embodiment, and the transceiver unit 1010 is configured to perform a receiving/sending-related operation of the second device in the foregoing method embodiment.

It should be understood that the apparatus 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically a transmit end in the foregoing embodiments, and may be configured to perform procedures and/or steps corresponding to the transmit end in the foregoing method embodiments; or the device 1000 may be specifically a receive end in the foregoing embodiments, and may be configured to perform procedures and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving/sending operations and a related processing operation in the method embodiments.

In addition, the transceiver unit may alternatively be a transceiver circuit (for example, may include a receiving circuit and a sending circuit), and the processing unit may be a processing circuit. In embodiments of this application, the apparatus in FIG. 8 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 is a block diagram of a communication apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the first device in the foregoing method embodiments.

In another possible implementation, the apparatus 2000 is configured to implement procedures and steps corresponding to the second device in the foregoing method embodiments.

It should be understood that the apparatus 2000 may be specifically a transmit end or a receive end in the foregoing embodiments, or may be a chip or a chip system. Correspondingly, the transceiver 2020 may be a transceiver circuit of the chip. This is not limited herein. Specifically, the apparatus 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be completed by a hardware integrated logic circuit in the processor or instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 10 is a block diagram of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the first device in the foregoing method embodiments.

For example, the logic circuit 3010 is configured to implement a processing-related operation performed by the first device in the foregoing method embodiments, for example, a processing-related operation performed by the first device in the embodiment shown in FIG. 2 or FIG. 3. The input/output interface 3020 is configured to implement a sending and/or receiving-related operation performed by the first device in the foregoing method embodiments, for example, a sending and/or receiving-related operation performed by the first device in the embodiment shown in FIG. 2 or FIG. 3.

In another solution, the chip system 3000 is configured to implement operations performed by the second device in the foregoing method embodiments.

For example, the logic circuit 3010 is configured to implement a processing-related operation performed by the second device in the foregoing method embodiments, for example, a processing-related operation performed by the second device in the embodiment shown in FIG. 2 or FIG. 3. The input/output interface 3020 is configured to implement a sending and/or receiving-related operation performed by the second device in the foregoing method embodiments, for example, a sending and/or receiving-related operation performed by the second device in the embodiment shown in FIG. 2 or FIG. 3.

An embodiment of this application further provides a computer-readable storage medium. The computer-readable storage medium stores computer instructions used for implementing the method performed by a terminal device (for example, a first device or a second device) in the foregoing method embodiments.

An embodiment of this application further provides a computer program product, including instructions. When the instructions are executed by a computer, the method performed by a terminal device (for example, a first device or a second device) in the foregoing method embodiments is implemented.

An embodiment of this application further provides a communication system. The communication system includes the first device or the second device in the foregoing embodiments.

For explanations and beneficial effect of related content of any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or an apparatus) to perform all or some of the steps in the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   determining a first frequency domain resource set in a first time unit, wherein the first frequency domain resource set comprises a frequency domain resource of a synchronization signal used for synchronization, the first frequency domain resource set is comprised in M frequency domain resource sets that carry a first message, M is a quantity of frequency domain resource sets occupied by the first message in a bandwidth part BWP, Q is a maximum quantity of frequency domain resource sets used for sending a synchronization signal in the BWP, M is less than or equal to Q, and Q is an integer greater than or equal to 2;
   determining a transmit power for the first message based on a maximum transmit power of a first device and a first parameter, wherein the transmit power for the first message does not exceed a difference between the maximum transmit power of the first device and the first parameter; and
   sending the first message in the first time unit based on the transmit power for the first message.

2. The method according to claim 1, wherein the transmit power for the first message is a transmit power of the first frequency domain resource set, a value of the first parameter is $\Delta$, $\Delta = A$, and $A = 10\,log_{10}(Q)$, or A is a power adjustment factor for sending the first message.

3. The method according to claim 1, wherein the transmit power for the first message is a transmit power of the M frequency domain resource sets, a value of the first parameter is $\Delta$, $\Delta = A - 10\,log_{10}(M)$, and $A = 10\,log_{10}(Q)$, or A is a power adjustment factor for sending the first message.

4. The method according to any one of claims 1 to 3, wherein a unit of the transmit power for the first message and a unit of the maximum transmit power of the first device are dBW or dBmW, and a unit of the first parameter is decibel dB.

5. The method according to any one of claims 1 to 4, wherein when the first message is a synchronization signal block SSB, the transmit power $P_{SSB}(i)$ for the first message satisfies:

$$P_{SSB}(i) = min\big(P_{CMAX} - \Delta, P_{O,SSB} + 10\,log_{10}(2^{\mu} \cdot M^{SSB}) + \alpha_{SSB} \cdot PL\big);$$

or

$$P_{SSB}(i) = min\big(P_{CMAX}, P_{O,SSB} + 10\,log_{10}(2^{\mu} \cdot M^{SSB}) + \alpha_{SSB} \cdot PL\big) - \Delta;$$

or

$$P_{SSB}(i) = P_{CMAX} - \Delta,$$

wherein
$i$ represents an index of the first time unit, $P_{CMAX}$ represents the maximum transmit power of the first device, $\Delta$ is the value of the first parameter, $M^{SSB}$ represents a bandwidth of the SSB, $\mu$ is a subcarrier spacing at which the first device sends the SSB, $P_{O,SSB}$ and $\alpha_{S\text{-}SSB}$ represent transmit power parameters of the SSB, and $PL$ represents a path loss between the first device and a serving cell.

6. The method according to any one of claims 1 to 5, wherein when the first message is a physical sidelink shared channel PSSCH, the transmit power $P_{PSSCH}(i)$ for the first message satisfies:

$$P_{PSSCH}(i) = min\left(P_{CMAX} - \Delta, P_{MAX,CBR}, min\big(P_{PSSCH,D}(i), P_{PSSCH,SL}(i)\big)\right),$$

wherein
i represents the index of the first time unit, $\Delta$ is the value of the first parameter, $P_{MAX,CBR}$ represents a maximum transmit power determined based on a channel busy ratio CBR, $P_{PSSCH,D}(i)$ represents a value of a power parameter that is of the PSSCH in the first time unit i and that is determined based on a downlink path loss, and $P_{PSSCH,SL}(i)$ represents a value of a power parameter that is of the PSSCH in the first time unit i and that is determined based on a sidelink path loss.

7. The method according to any one of claims 1 to 6, wherein

Q represents a quantity of frequency domain resource sets for sending the SSB in the BWP; or
Q represents a quantity of frequency domain resource sets comprised in a resource pool, and the resource pool is located in the BWP.

8. The method according to any one of claims 1 to 7, wherein a frequency of the synchronization signal is configured by using signaling or predefined.

9. The method according to any one of claims 1 to 8, wherein the method further comprises:
obtaining channel occupancy time COT, wherein the COT comprises the M frequency domain resource sets.

**10.** A communication method, wherein the method comprises:

obtaining a first frequency of a first SSB used for synchronization, wherein the first frequency is located in a first frequency domain resource set, the first frequency domain resource set comprises all subcarriers that carry the first SSB, and the first frequency domain resource set is located in a bandwidth part BWP; and
sending the first SSB based on the first frequency.

**11.** A communication method, wherein the method comprises:

obtaining a first frequency of a first SSB used for synchronization, wherein the first frequency is located in a first frequency domain resource set, the first frequency domain resource set comprises all subcarriers that carry the first SSB, and the first frequency domain resource set is located in a bandwidth part BWP; and
receiving the first SSB based on the first frequency.

**12.** The method according to claim 10 or 11, wherein obtaining the first frequency of the first SSB used for synchronization comprises:

determining the first frequency based on at least one of a subcarrier spacing, a first gap, a second gap, a third gap, or a quantity N of SSBs comprised in the first frequency domain resource set, wherein N is an integer greater than or equal to 2, wherein
the subcarrier spacing is a subcarrier spacing at which the first SSB is sent, the first gap is a frequency gap between a start frequency of the first frequency domain resource set and a start frequency of an SSB with a lowest frequency in the first frequency domain resource set, the second gap is a frequency gap between two adjacent SSBs in the first frequency domain resource set, and the third gap is a frequency gap between an end frequency of the first frequency domain resource set and an end frequency of an SSB with a highest frequency in the first frequency domain resource set.

**13.** The method according to any one of claims 10 to 12, wherein the first frequency is any one of a plurality of SSB candidate frequencies in the first frequency domain resource set, and the plurality of SSB candidate frequencies are determined based on a bandwidth of the first SSB and a frequency gap between two adjacent SSBs.

**14.** The method according to any one of claims 10 to 13, wherein the first frequency $f_{SSB1}$ satisfies:

$$f_{SSB1} = f_1 + G_1 + M_{SSB}/2 + n \cdot (G + M_{SSB}),$$

wherein
$f_1$ represents the start frequency of the first frequency domain resource set, $M^{SSB}$ represents the bandwidth of the first SSB, $G_1$ represents a bandwidth occupied by the first gap, the first gap is the frequency gap between the start frequency of the first frequency domain resource set and the start frequency of the SSB with the lowest frequency in the first frequency domain resource set, G represents a bandwidth occupied by the second gap, the second gap is a frequency gap between two adjacent SSBs in the first frequency domain resource set, a value of $n$ is any integer from 0 to N-1, N is the quantity of SSBs comprised in the first frequency domain resource set, and N is an integer greater than or equal to 2.

**15.** The method according to any one of claims 10 to 14, wherein the first frequency $f_{SSB1}$ satisfies:

$$f_1 + G_1 + M_{SSB}/2 \leq f_{SSB1} \leq f_1 + N_{RBset1} - 1 - M_{SSB}/2;$$

or

$$f_1 + G_1 + M_{SSB}/2 \leq f_{SSB1} \leq f_1 + G_1 + M_{SSB}/2 + (N-1) \cdot (G + M_{SSB});$$

or

$$f_1 + M_{SSB}/2 \leq f_{SSB1} \leq f_1 + N_{RBset1} - 1 - M_{SSB}/2;$$

or

$$f_1 + M_{SSB}/2 \leq f_{SSB1} \leq f_1 + M_{SSB}/2 + (N-1) \cdot (G + M_{SSB}),$$

wherein

$f_1$ represents the start frequency of the first frequency domain resource set, $M^{SSB}$ represents the bandwidth of the first SSB, G represents the bandwidth occupied by the second gap, the second gap is a frequency gap between two adjacent SSBs in the first frequency domain resource set, $G_1$ represents the bandwidth occupied by the first gap, the first gap is the frequency gap between the start frequency of the first frequency domain resource set and the start frequency of the SSB with the lowest frequency in the first frequency domain resource set, and $N_{RBset1}$ represents a bandwidth occupied by the first frequency domain resource set.

16. The method according to any one of claims 10 to 15, wherein the method further comprises:
    determining N-1 third frequencies based on the first frequency, wherein the N-1 third frequencies are frequencies of N-1 second SSBs, the first SSB and the N-1 second SSBs are comprised in the first frequency domain resource set, and N is an integer greater than or equal to 2.

17. The method according to claim 16, wherein the third frequency $f_{SSB2}$ satisfies:

$$f_{SSB2} = f_{SSB1} + k \cdot (G + M_{S-SSB}),$$

wherein

$f_{SSB1}$ represents the first frequency, and k is an integer.

18. The method according to any one of claims 10 to 17, wherein the third frequency is any one or more of the plurality of SSB candidate frequencies in the first frequency domain resource set, and the plurality of SSB candidate frequencies are determined based on the bandwidth of the first SSB and a frequency gap between two adjacent SSBs.

19. The method according to any one of claims 10 to 18, wherein

$$G_1 + N \cdot M_{SSB} + (N-1) \cdot G + G_2 \leq N_{RBset1};$$

or

$$G_1/N_{SC}^{RB} + N \cdot M_{SSB} + (N-1) \cdot G/N_{SC}^{RB} + G_2/N_{SC}^{RB} \leq N_{RBset1};$$

or

$$G_1/(2^\mu N_{SC}^{RB}) + N \cdot M_{SSB} + (N-1) \cdot G/(2^\mu N_{SC}^{RB}) + G_2/(2^\mu N_{SC}^{RB}) \leq N_{RBset1},$$

wherein

$G_1$ represents the bandwidth occupied by the first gap, the first gap is the frequency gap between the start frequency of the first frequency domain resource set and the start frequency of the SSB with the lowest frequency in the first frequency domain resource set, G represents the bandwidth occupied by the second gap, the second gap is a frequency gap between two adjacent SSBs in the first frequency domain resource set, $G_2$ represents a bandwidth occupied by the third gap, the third gap is the frequency gap between the end frequency of the first frequency domain resource set and the end frequency of the SSB with the highest frequency in the first frequency domain resource set, $M^{SSB}$ represents the bandwidth of the first SSB, $N_{RBset1}$ represents the bandwidth occupied by the first frequency domain resource set, $N_{SC}^{RB}$ represents a quantity of subcarriers comprised in one resource block RB, $\mu$ represents the subcarrier spacing at which the first SSB is sent, N is the quantity of SSBs comprised in the first frequency domain resource set, and N is an integer greater than or equal to 2.

20. The method according to any one of claims 10 and 12 to 19, wherein the method further comprises:

mapping the first SSB at the first frequency; and

mapping the N-1 second SSBs on the first frequency domain resource set at the second gap based on the first frequency, wherein the second gap is a frequency gap between two adjacent SSBs in the first frequency domain resource set, N is the quantity of SSBs comprised in the first frequency domain resource set, and N is an integer greater than or equal to 2.

21. The method according to any one of claims 11 to 19, wherein the method further comprises:

receiving or demapping the first SSB at the first frequency; and

receiving or demapping at least one of the N-1 second SSBs on the first frequency domain resource set at the second gap based on the first frequency, wherein the second gap is a frequency gap between two adjacent SSBs in the first frequency domain resource set, N is the quantity of SSBs comprised in the first frequency domain resource set, and N is an integer greater than or equal to 2.

22. The method according to claim 20 or 21, wherein

a start frequency of a third SSB is the start frequency of the first frequency domain resource set, the third SSB belongs to the N-1 second SSBs, and a bandwidth occupied by the third SSB is less than the bandwidth occupied by the first SSB; and/or

an end frequency of a fourth SSB is the end frequency of the first frequency domain resource set, the fourth SSB belongs to the N-1 second SSBs, and a bandwidth occupied by the fourth SSB is less than the bandwidth occupied by the first SSB.

23. The method according to claim 20 or 21, wherein

a start frequency of a third SSB is not the start frequency of the first frequency domain resource set, the third SSB belongs to the N-1 second SSBs, and a bandwidth occupied by the third SSB is less than the bandwidth occupied by the first SSB; and/or

an end frequency of a fourth SSB is not the end frequency of the first frequency domain resource set, the fourth SSB belongs to the N-1 second SSBs, and a bandwidth occupied by the fourth SSB is less than the bandwidth occupied by the first SSB.

24. The method according to any one of claims 10 to 23, wherein that the first frequency domain resource set comprises all the subcarriers that carry the first SSB comprises:

the first frequency is not located in a guard band between two adjacent frequency domain resource sets in the BWP; and/or

a resource element RE of the first SSB is not located in a guard band between two adjacent frequency domain resource sets in the BWP.

25. The method according to any one of claims 10 to 24, wherein
the BWP in a synchronization time domain unit comprises M frequency domain resource sets, the M frequency domain resource sets comprise the first frequency domain resource set and M-1 second frequency domain resource sets, the synchronization time domain unit comprises a time domain unit of the first SSB, the second frequency domain resource set comprises q fifth SSBs, and M and q are positive integers greater than or equal to 2.

26. The method according to claim 25, wherein frequency positions of the q fifth SSBs in the second frequency domain resource set are in one-to-one correspondence with and are the same as frequency positions of the N SSBs in the first frequency domain resource set, wherein q=N.

27. The method according to claim 25 or 26, wherein the frequency positions of the q fifth SSBs in the second frequency domain resource set are predefined or configured by using signaling.

28. The method according to any one of claims 25 to 27, wherein a bandwidth position that is of an $r^{th}$ SSB in a $j^{th}$ frequency domain resource set in the M frequency domain resource sets and that is in the BWP is determined based on one or more of the following parameters:

a subcarrier spacing;

a first bandwidth, wherein the first bandwidth is the bandwidth of the first frequency domain resource set, or the first bandwidth is a bandwidth of the second frequency domain resource set;

the second gap, wherein the second gap is a frequency gap between two adjacent SSBs in the first frequency domain resource set;

a fourth gap, wherein the fourth gap is a frequency gap between the first frequency domain resource set and the second frequency domain resource set, or a frequency gap between two adjacent second frequency domain resource sets;

an index of the first frequency domain resource set in the M frequency domain resource sets; or

an index of the second frequency domain resource set in the M frequency domain resource sets, wherein

$j$ is an integer greater than or equal to 1 and less than or equal to M, and $r$ is a positive integer less than or equal to q.

29. The method according to claim 28, wherein a frequency position $f_{r,j}$ that is of the $r^{th}$ SSB in the $j^{th}$ frequency domain resource set in the M frequency domain resource sets and that is on a first carrier or in the BWP satisfies the following condition:

$$f_{r,j} = f_{S-SSB_r} + (j - i) \cdot (N_{RBset} + N_{GB}),$$

wherein

$f_{SSBr}$ represents a frequency of an $r^{th}$ SSB in the first frequency domain resource set, $i$ represents the index of the first frequency domain resource set in the M frequency domain resource sets, j represents the index of the second frequency domain resource set in the M frequency domain resource sets, $r$ represents an index of an $r^{th}$ SSB in the $N$ SSBs in the first frequency domain resource set, and/or r represents an index of an $r^{th}$ SSB in the q fifth SSBs in the second frequency domain resource set, $N_{RBset}$ is the first bandwidth, $N_{GB}$ is the fourth gap, and r is a positive integer less than or equal to q.

30. The method according to any one of claims 25 to 29, wherein the method further comprises:
sending an SSB on the M frequency domain resource sets of the synchronization time domain unit.

31. The method according to claim 30, wherein before sending the SSB on the M frequency domain resource sets of the synchronization time domain unit, the method further comprises:
receiving indication information, wherein the indication information indicates to send the SSB on the M frequency domain resource sets of the synchronization time domain unit.

32. The method according to any one of claims 10 to 31, wherein the first SSB is a sidelink synchronization signal block S-SSB.

33. A communication apparatus, comprising a module or a unit configured to perform the method according to any one of claims 1 to 9 or claims 10 to 31.

34. A communication apparatus, wherein the communication apparatus comprises a processor, the processor is coupled to a memory, the memory stores instructions, and when the instructions are run by the processor, the communication apparatus is enabled to perform the method according to any one of claims 1 to 9 or claims 10 to 31.

35. A computer-readable storage medium, wherein the computer-readable storage medium is configured to store a computer program, and when the computer program is run on a computer, the computer is enabled to perform the method according to any one of claims 1 to 9 or claims 10 to 31.

36. A chip, comprising a processor, configured to invoke a computer program from a memory and run the computer program, to enable a communication apparatus on which the chip is installed to perform the method according to any one of claims 1 to 9 or claims 10 to 31.

37. A computer program product, wherein when the computer program product is executed by a communication apparatus, the method according to any one of claims 1 to 9 or claims 10 to 31 is implemented.

**FIG. 1**

**FIG. 2**

300

First device

Second device

S310: Determine a first
frequency of a first SSB used for
synchronization

S320: Determine the first
frequency of the first SSB used
for synchronization

S330: Send the first SSB based on the first
frequency

FIG. 3

GS2

⣿ Synchronization RB set

☐ Non-synchronization RB set

▓ SSB

RB-set 4

GS

RB-set 3

BWP

RB-set 2

RB-set 1

Second S-SSB N−1

...

Second S-SSB 2

Second S-SSB 1

First S-SSB

GS1

Slot in which an S-SSB is located

FIG. 4

FIG. 5

FIG. 6

FIG. 7

FIG. 8

Communication apparatus 2000

Processor
2010

Memory
2030

Transceiver
2020

**FIG. 9**

Chip system 3000

Logic circuit 3010

Input/Output interface 3020

**FIG. 10**

## INTERNATIONAL SEARCH REPORT

| International application No. |
| --- |
| **PCT/CN2024/071737** |

### A. CLASSIFICATION OF SUBJECT MATTER

H04W 72/0453(2023.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

WPABSC; CNTXT; CJFD; CNKI; 3GPP; IETF; VEN; ENTXT: 侧行链路, 非授权频谱, 终端, 发射功率, 稳定性, 带宽部分, 频域, 同步信号块, sidelink, SL, unlicensed w spectrum, terminal, transmitting w power, stability, BWP, frequency, SSL

### C. DOCUMENTS CONSIDERED TO BE RELEVANT

| Category* | Citation of document, with indication, where appropriate, of the relevant passages | Relevant to claim No. |
| --- | --- | --- |
| X | CN 116017733 A (ZTE CORP.) 25 April 2023 (2023-04-25)<br>description, paragraphs [0044]-[0063] and [0197]-[0202] | 10, 11, 32-37 |
| A | CN 108260195 A (SHANGHAI LANGBO COMMUNICATION TECHNOLOGY CO., LTD.)<br>06 July 2018 (2018-07-06)<br>description, paragraphs [0006]-[0173] | 1-37 |
| A | US 2020059906 A1 (QUALCOMM INC.) 20 February 2020 (2020-02-20)<br>entire document | 1-37 |
| A | INTERDIGITAL, INC. "On frequency-domain resource allocation for NR"<br>*3GPP TSG RAN WG1 NR Ad-Hoc#2, R1-1710953*, 17 June 2017 (2017-06-17),<br>entire document | 1-37 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 March 2024** | **07 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071737**

| Patent document cited in search report | | | Publication date (day/month/year) | Patent family member(s) | | | Publication date (day/month/year) |
|---|---|---|---|---|---|---|---|
| CN | 116017733 | A | 25 April 2023 | None | | | |
| CN | 108260195 | A | 06 July 2018 | None | | | |
| US | 2020059906 | A1 | 20 February 2020 | EP | 3952563 | A1 | 09 February 2022 |
| | | | | WO | 2020036794 | A1 | 20 February 2020 |
| | | | | WO | 2020036794 | A9 | 16 April 2020 |
| | | | | US | 11115968 | B2 | 07 September 2021 |
| | | | | EP | 3837911 | A1 | 23 June 2021 |

Form PCT/ISA/210 (patent family annex) (July 2022)

**REFERENCES CITED IN THE DESCRIPTION**

**Patent documents cited in the description**

- CN 202310541473
- CN 202311016420